# EUROPÄISCHE PATENTSCHRIFT

(11) **EP 3 044 735 B1**
(45) Veröffentlichungstag und Bekanntmachung des Hinweises auf die Patenterteilung: **04.03.2020**
(21) Anmeldenummer: 14765925.4
(22) Anmeldetag: 11.09.2014
(51) Int. Cl.: B23F 23/06, B23F 23/12, B23Q 1/00, G06K 19/07, G06K 19/077, G06K 19/04

(54) **RFID-KENNZEICHNUNG METALLISCHER WECHSELTEILE FÜR WERKZEUGMASCHINEN**
RFID IDENTIFICATION OF METAL INTERCHANGEABLE PARTS FOR MACHINE TOOLS
CARACTÉRISATION RFID DE PIÈCES MÉTALLIQUES AMOVIBLES POUR MACHINES-OUTILS

(30) Priorität: 12.09.2013 DE 102013110055
(43) Veröffentlichungstag der Anmeldung: 20.07.2016
(73) Patentinhaber: Reishauer AG, 8304 Wallisellen (CH)
(72) Erfinder: RONNEBERGER, Erich, 79725 Laufenburg/ Baden (DE); GRETLER, Markus, 8908 Hedingen (CH); KÜNG, Roland, 8633 Wolfhausen (CH); FRÜH, Daniel, 8472 Seuzach (CH)
(74) Vertreter: Detken, Andreas
(86) Internationale Anmeldenummer: PCT/EP2014/069460
(87) Internationale Veröffentlichungsnummer: WO 2015/036519

(56) Entgegenhaltungen:
- EP-A1- 1 339 014
- EP-A1- 1 746 530
- DE-A1- 4 432 808
- DE-A1-102006 008 395
- DE-T2-602004 005 201
- US-A1- 2006 014 475

## Beschreibung

### TECHNISCHES GEBIET

Die vorliegende Erfindung betrifft eine Werkzeugmaschine, insbesondere eine Zahnradschleifmaschine, gemäss dem Oberbegriff des Anspruchs 1. Die Erfindung betrifft ausserdem ein auswechselbares Bauteil einer solchen Werkzeugmaschine.

### STAND DER TECHNIK

Werkzeugmaschinen werden oft mit verschiedensten auswechselbaren Bauteilen (kurz: Wechselteile) aus Metall betrieben. Solche Wechselteile können z.B. sein: Abrichtwerkzeuge, Spannmittel für Werkstücke, Aufnahmeteile für Werkzeuge wie z.B. Schleifscheiben, Kühlmitteldüsen, Greiferbacken an Handhabungsgeräten usw. Je nach Anwendung wird die Werkzeugmaschine mit unterschiedlichen Wechselteilen bestückt. Die nicht benötigten Wechselteile werden in einem Lager verwahrt. Um die Wechselteile jederzeit auffinden und identifizieren zu können, ist es erforderlich, die Wechselteile unverwechselbar zu kennzeichnen.

Eine bekannte Technologie zur Kennzeichnung von Wechselteilen ist die RFID-Technologie (RFID = Radio-Frequency Identification). In den letzten Jahren entwickelte sich die RFID-Technik rasant weiter und ist in vielen technischen Gebieten nunmehr durchgehend von der Fertigung bis zur Lagerhaltung präsent. Ein RFID-System kann in die meisten Steuerungen integriert werden, ist für alle gängigen Bus-Systeme geeignet und speichert Daten direkt am Wechselteil ab. Ein RFID-System umfasst einen RFID-Transponder (auch als Tag bezeichnet) und ein RFID-Schreib-/Lesegerät (auch als Reader bezeichnet). Tag und Reader sind über hochfrequente Radiowellen gekoppelt. Dabei wird in der Regel der Transponder aus dem hochfrequenten Wechselfeld, das vom Reader erzeugt wird, mit Energie versorgt. RFID-Komponenten sind in vielen Bauformen erhältlich.

Beim oben genannten durchgehenden Einsatz der RFID- Technik von der Fertigung bis zur Lagerhaltung ist der Maschinenhersteller nur ein Glied in einer globalen Kette von Lieferanten. Der Einsatz dieser Technik in der Praxis erfordert daher die Einhaltung von globalen Normen. Für die RFID-Technik existiert unter anderem die Norm ISO 15693. Diese legt eine Übertragungsfrequenz von 13.56 MHz fest. Die früher weit verbreitete niederfrequente RFID-Technik mit Frequenzen unterhalb von 500 kHz (Langwellenbereich, "LF-Technik") kann in globalen Anwendungen wegen unterschiedlichen nationalen Vorschriften zu Funklizenzen nicht eingesetzt werden.

Im Stand der Technik wurde verschiedentlich vorgeschlagen, metallische Wechselteile von Werkzeugmaschinen mit einem elektronischen Datenträger zu versehen, der berührungslos ausgelesen werden kann. Ein Beispiel findet sich in DE 10 2006 008 395 A1. Dort ist ein rotierendes Werkzeug mit einem elektronischen Datenträger versehen. Um zu ermöglichen, den Datenträger auch während der Drehung des Werkzeugs auszulesen und zu beschreiben, wird vorgeschlagen, den elektronischen Datenträger ringförmig auszubilden und konzentrisch zur Rotationsachse anzuordnen und Signale über einen ringförmigen Luftspalt hinweg zu übertragen. Der Luftspalt ist offen und nicht speziell gegen Umwelteinflüsse geschützt.

Eine weitere Werkzeugidentifikation mittels RFID-Technologie wird in EP 1 339 014 A1 vorgeschlagen. Auf einem rotierenden Befestigungskörper sind mehrere RFID-Tags angebracht. Die Signalübertragung erfolgt ebenfalls über einen offenen Luftspalt.

In der EP 1 746 530 A1 wird zur Identifikation von Bearbeitungswerkzeugen in einer Werkzeugaufnahme vorgeschlagen, auf dem Aussenumfang der Werkzeugaufnahme eine Antennenanordnung eines RFID-Transponders vorzusehen. Auch hier erfolgt die Signalübertragung über einen offenen Luftspalt.

Derartige Anordnungen funktionieren im realen Betrieb meist recht gut, solange die Datenübertragung in einem relativ niederfrequenten Bereich von höchsten einigen hundert kHz erfolgt. Wenn die Übertragung aber bei deutlich höheren Frequenzen im Bereich mehrerer MHz erfolgen soll, z.B. bei 13.56 MHz wie in ISO 15693, hat sich gezeigt, dass die Datenübertragung in der Praxis unzuverlässig wird oder vollständig versagt. Dies gilt insbesondere dann, wenn Betriebsmittel wie Kühlflüssigkeiten oder Schleifschlamm zum Einsatz kommen, wie dies in der Regel bei Werkzeugmaschinen der Fall ist.

Der Artikel "RFID misst Werkzeugverschleiss auch durch Metall" in www.maschinenmarkt.vogel.de vom 02.02.2009 offenbart einen RFID-Transponder, der sich in einem metallischen Werkzeugadapter befindet. Der Werkzeugadapter ist in eine drehbare Spindel eingesetzt. Am Aussenumfang des Werkzeugadapters ist eine Antennenspule angeordnet, die mit dem RFID-Transponder über ein Kabel verbunden ist. In der drehbaren Spindel befindet sich eine weitere Antennenspule. Ein weiteres Paar von Antennenspulen befindet sich zwischen der drehbaren Spindel und einem feststehenden Teil eines Messgeräts. Die genaue Ausgestaltung der Funkstrecken zwischen Adapter und Spindel einerseits und zwischen Spindel und feststehendem Teil andererseits wird nicht offenbart. Insbesondere wird nicht offenbart, wie die Antennenspulen in der Spindel ausgebildet und angeordnet sind und welche Dimensionen diese Spulen haben. Ebenfalls ist nicht offenbar, in welchem Frequenzbereich der RFID-Transponder betrieben wird.

DE 44 32 808 A1 offenbart ein Sensorsystem mit einer drahtlosen Schwingungs- oder Körperschallsensorvorrichtung, die die Schwingungsenergie ihres Messelements ohne weitere Bauelemente direkt dazu benutzt, die Schwingungsenergie über eine mit dem Messelement verbundene Primärspule eines transformatorischen Spulenpaares auf die Sekundärspule des transformatorischen Spulenpaares zu übertragen. Eine ähnliche Vorrichtung ist auch in DE 60 2004 005 201 T2 offenbart.

### DARSTELLUNG DER ERFINDUNG

Der Erfindung liegt die Aufgabe zugrunde, eine Werkzeugmaschine anzugeben, bei der eine Signalübertragung zu einem Wechselteil auch bei hohen Frequenzen möglich ist, und zwar selbst dann, wenn Betriebsmittel wie Kühlflüssigkeiten, Schleifschlamm oder Schleifspäne vorhanden sind.

Diese Aufgabe wird durch eine Werkzeugmaschine mit den Merkmalen des Anspruchs 1 und durch ein Bauteil einer Werkzeugmaschine mit den Merkmalen des Anspruchs 11 gelöst. Weitere Ausführungsformen sind in den abhängigen Ansprüchen angegeben.

Es wird also eine Werkzeugmaschine vorgeschlagen, welche aufweist:
ein erstes Bauteil, das eine erste Antennenspule zur drahtlosen Signalübertragung aufweist, und
mindestens ein am ersten Bauteil entfernbar und/oder beweglich angeordnetes zweites Bauteil, das eine zweite Antennenspule zur drahtlosen Signalübertragung aufweist.

Um eine sichere drahtlose Signalübertagung zwischen der ersten und der zweiten Antennenspule zu gewährleisten, begrenzen das erste Bauteil und das zweite Bauteil gemeinsam einen Hohlraum, der im Wesentlichen vollständig von einem elektrischen leitenden Material, insbesondere von Metall, umgeben ist, und die erste Antennenspule und die zweite Antennenspule sind gemeinsam in diesem Hohlraum angeordnet.

Bei einer solchen Anordnung sind die beiden Antennenspulen induktiv gekoppelt und bilden eine Funkstrecke, die durch einen faradayschen Käfig vor störenden äusseren Einflüssen geschützt ist. Wenn die beiden Bauteile aus Metall gefertigt sind, wie dies bei Werkzeugmaschinen üblich ist, handelt es sich also um eine "metallgeschützte Funkstrecke". Der Hohlraum kann bei Bedarf sehr klein sein (z.B. einen Innendurchmesser von 20 mm oder weniger aufweisen), da eine zuverlässige Signalübertragung auch schon mit kleinen Antennen (z.B. mit einem Aussendurchmesser von 15 mm) erreicht werden kann. Dadurch kann die vorgeschlagene Lösung auch bei engen Platzverhältnissen, wie sie häufig bei Werkzeugmaschinen vorherrschen, realisiert werden. Die vorgeschlagene Anordnung von Antennenspulen ist geeignet, durchgehend von der Fertigung auf der Maschine bis zur Ablage im Lager eingesetzt zu werden.

Der Hohlraum wird als "im wesentlichen vollständig von elektrisch leitendem Material umgeben" angesehen, wenn eventuell vorhandene Unterbrechungen oder Öffnungen in der Begrenzungsfläche des Hohlraums klein im Verhältnis zum Flächeninhalt der gesamten Begrenzungsfläche sind und insbesondere eine Fläche von weniger als 10%, bevorzugt weniger als 5% dieser Begrenzungsfläche beanspruchen. Zudem sollten solche Öffnungen klein im Verhältnis zur Wellenlänge der übertragenen elektromagnetischen Strahlung sein, was aber bei den in der Praxis üblichen Wellenlängen im Meterbereich ohnehin erfüllt ist. Solche Unterbrechungen und Öffnungen können z.B. durch einen Spalt zwischen dem ersten und zweiten Bauteil oder durch Zugangsöffnungen für elektrische Kabel gebildet sein.

Beim ersten Bauteil kann es sich z.B. um ein starr am Maschinenständer angeordnetes Bauteil, z.B. um ein Teil eines Gehäuses für eine drehbare Spindel handeln. In diesem Fall handelt es sich beim zweiten Bauteil z.B. um die Spindel selbst. Beim ersten Bauteil kann es sich aber auch um ein Bauteil handeln, das selbst gegenüber dem Maschinenständer drehbar ist, z.B. um besagte Spindel, und beim zweiten Bauteil handelt es sich dann um ein abnehmbar an der Spindel anbringbares Bauteil wie ein Werkzeug, eine Werkzeug- oder Werkstückaufnahme, einen Adapter usw.

Vorzugsweise ist der Hohlraum derart ausgebildet und angeordnet, dass keine Betriebsflüssigkeiten der Werkzeugmaschine, wie Kühlmittel oder Schleifschlamm, in den Hohlraum eindringen können. Solche Betriebsflüssigkeiten sind bei hohen Frequenzen oft elektrisch leitend, so dass die Betriebsflüssigkeiten hochfrequente elektromagnetische Wechselfelder unter Umständen stark dämpfen können. Auch in den Betriebsflüssigkeiten mitgeführte Verunreinigungen wie Schleifspäne sind häufig elektrisch leitend und wirken stark dämpfend. Zudem können durch Reibung elektrostatische Entladungen entstehen, die störend auf die Signalübertragung wirken.

Um das Eindringen von Betriebsflüssigkeiten zu vermeiden, kann zwischen dem ersten und dem zweiten Bauteil eine Dichtung vorgesehen sein. Alternativ oder zusätzlich kann der Hohlraum an Bereichen des ersten und zweiten Bauteils ausgebildet sein, die im Betrieb schon gar nicht erst mit Betriebsflüssigkeiten in Berührung kommen und die insbesondere gegenüber Bereichen, die Betriebsflüssigkeiten führen, abgedichtet sein können. Es ist alternativ oder zusätzlich auch möglich, mindestens einen Teilbereich des Hohlraums mit einem nichtleitenden Material, z.B. einer Vergussmasse, zu verfüllen oder abzudichten. Wenn der Hohlraum nicht anderweitig vor dem Eindringen von elektrisch leitenden Betriebsflüssigkeiten geschützt ist, ist es bevorzugt, dass mindestens 95%, vorzugsweise mindestens 99% des gesamten Volumens des Hohlraums durch nichtleitende Materialien vor dem Eindringen von Betriebsflüssigkeiten geschützt sind.

Die beiden Antennenspulen sind vorzugsweise koaxial angeordnet, um die induktive Kopplung und damit die Signalübertragung zu optimieren. Genauer ausgedrückt, definiert die erste Antennenspule vorzugsweise eine erste Spulenachse, die zweite Antennenspule definiert eine zweite Spulenachse, und die erste Spulenachse und die zweite Spulenachse fallen im Wesentlichen zusammen. Dabei können die Antennenspulen insbesondere einen im Wesentlichen kreisförmigen Grundriss haben.

Der von den beiden Bauteilen begrenzte Hohlraum ist in diesem Fall bevorzugt zylindrisch, wobei die Zylinderachse mit den Spulenachsen zusammenfällt. Der Hohlraum kann insbesondere vollzylindrisch sein. In diesem Fall befindet sich vorzugsweise im Bereich der Zylinderachse kein elektrisch leitendes Material. In anderen Ausführungsformen ist der Hohlraum zylindrisch-ringförmig, wobei sich dann im Bereich der Zylinderachse entsprechend leitendes Material befindet.

Sofern bei einer solchen Anordnung die Abmessungen der Antennenspulen vergleichbar mit den Abmessungen des Hohlraums sind, führt die Umschliessung der Antennenspulen durch leitendes Material nicht nur zu einer Abschirmung von Störeinflüssen, sondern auch zu einer Bündelung der magnetischen und elektrischen Feldlinien im Hohlraum, so dass die Signalübertragung gerichteter als in einem offenen Luftspalt erfolgt. Dazu ist es bevorzugt, wenn der maximale Innendurchmesser des Hohlraums nicht grösser als ca. das 1.5-Fache des grösseren der beiden Spulendurchmesser ist, bevorzugt nicht grösser als das 1.2-Fache diese Durchmessers. Präziser ausgedrückt weist die erste Antennenspule einen ersten Durchmesser auf, die zweite Antennenspule weist einen zweiten Durchmesser auf, und der Hohlraum weist vorzugsweise einen maximalen Innendurchmesser auf, der nicht grösser als das 1.5-Fache (bevorzugt nicht grösser als das 1.2-Fache) des grösseren Werts aus erstem Durchmesser und zweitem Durchmesser ist. Bevorzugt ist die Differenz zwischen dem maximalen Innendurchmesser des Hohlraums und dem grösseren der beiden Spulendurchmesser nicht grösser als 10 mm, stärker bevorzugt nicht grösser als 5 mm.

Um eine genügende Ausbildung von magnetischen Feldlinien um die Windungen der Antennenspulen herum zu gewährleisten, sollte andererseits der radiale und axiale Abstand der Antennenspulen zum umgebenden elektrisch leitenden Material nicht zu klein sein. Bevorzugt weisen die erste Antennenspule und die zweite Antennenspule einen Abstand zum umgebenden elektrisch leitenden Material auf, der überall mindestens 1 mm, bevorzugt mindestens 1.5 mm beträgt.

Die Signalübertragung zwischen der ersten Antennenspule und der zweiten Antennenspule kann im Wesentlichen in axialer Richtung oder im Wesentlichen in radialer Richtung erfolgen; es ist aber auch möglich, dass die Übertragung diagonal zur gemeinsamen Spulenachse erfolgt. Im Fall von axialer Signalübertragung ist es bevorzugt, wenn sich die erste Antennenspule und die zweite Antennenspule axial gegenüberstehen. Dazu können die beiden Antennenspulen im Wesentlichen den gleichen Aussen- und Innendurchmesser aufweisen. Im Fall von radialer Signalübertragung ist es bevorzugt, wenn die erste Antennenspule die zweite Antennenspule radial umgibt, oder wenn die zweite Antennenspule die erste Antennenspule radial umgibt, wobei die beiden Antennenspulen dann vorzugsweise in einer gemeinsamen Ebene angeordnet sind.

Das erste und das zweite Bauteil können relativ zueinander um eine Drehachse drehbar sein. Dies ist z.B. dann der Fall, wenn es sich beim ersten Bauteil um ein fest am Maschinenständer angebrachtes Bauteil und beim zweiten Bauteil um eine Spindel handelt. In diesem Fall ist es bevorzugt, wenn die erste Antennenspule und die zweite Antennenspule derart angeordnet sind, dass eine drahtlose Signalübertragung zwischen der ersten Antennenspule und der zweiten Antennenspule sowohl im Stillstand als auch während einer Drehung des zweiten Bauteils gegenüber dem ersten Bauteil möglich ist. Dadurch wird es möglich, ein Sende-/Empfangsmodul, z.B. einen RFID-Transponder, der mit einer der Antennenspulen verbunden ist, selbst im Betrieb bei hoher Drehzahl auszulesen. Um dies zu erreichen, ist es bevorzugt, wenn die erste Antennenspule eine erste Spulenachse definiert, die zweite Antennenspule eine zweite Spulenachse definiert, und die erste Spulenachse und die zweite Spulenachse mit der Drehachse übereinstimmen. In diesem Fall ist der Hohlraum vorzugsweise rotationssymmetrisch und koaxial mit der Drehachse ausgebildet.

Es sind aber auch Situationen denkbar, in denen das erste und zweite Bauteil gemeinsam gegenüber einem Maschinenbett um eine Drehachse drehbar sind, z.B. wenn es sich beim ersten Bauteil um eine Spindel und beim zweiten Bauteil um ein darin gehaltenes Werkzeug oder eine darin gehaltene Werkstückaufnahme handelt. In diesem Fall ist es bevorzugt, wenn der Hohlraum entweder ebenfalls koaxial mit der Drehachse oder derart beabstandet von der Drehachse angeordnet ist, dass der Hohlraum nicht mit der Drehachse überlappt. Im letzteren Fall kann ein zweiter, identischer Hohlraum um 180° um die Drehachse versetzt vorgesehen werden, um das Auswuchten zu erleichtern.

Bevorzugt wird der Hohlraum zumindest in einem der beiden Bauteile durch eine zylindrische Aussparung begrenzt, wobei das andere Bauteil dann diese Aussparung zu dem Hohlraum schliesst. In anderen Worten ist es bevorzugt, dass
zumindest das erste Bauteil einen Bereich aus elektrisch leitendem Material, vorzugsweise einen metallischen Bereich, mit einer zylindrischen Aussparung aufweist,
die zylindrische Aussparung eine Zylinderachse definiert und zu einer Oberfläche des ersten Bauteils hin eine Öffnung aufweist,
die erste Antennenspule konzentrisch zur Zylinderachse in einem öffnungsnahen Bereich der zylindrischen Aussparung angeordnet ist, und
die zylindrische Aussparung durch das zweite Bauteil zu dem Hohlraum geschlossen ist.

Die vorliegende Erfindung bezieht sich in einem weiteren Aspekt auch ein entsprechend ausgebildetes Bauteil, also auf ein Bauteil zum Einsatz in einer Werkzeugmaschine mit folgenden Eigenschaften:
Das Bauteil weist eine Antennenspule zur drahtlosen Signalübertragung auf, wobei die Antennenspule eine Spulenachse definiert.
Das Bauteil weist einen Bereich aus elektrisch leitendem Material, vorzugsweise Metall, mit einer zylindrischen Aussparung auf, wobei die zylindrische Aussparung eine Zylinderachse definiert und zu einer Oberfläche des Bauteils hin offen ist.
Die Antennenspule ist in der zylindrischen Aussparung konzentrisch zur Zylinderachse angeordnet, bevorzugt in einem öffnungsnahen Bereich der Aussparung.

Die zylindrische Aussparung weist in axialer Richtung vorzugsweise nur eine geringe Tiefe auf, insbesondere eine Tiefe von 4-10 mm, bevorzugt von ca. 6 mm. Eine grössere Tiefe wird einerseits nicht benötigt, wenn flache Antennenspulen eingesetzt werden, und ist andererseits auch nachteilig, weil eine zu grosse Tiefe nicht zur erwünschten Konzentration der elektrischen und magnetischen Feldlinien beiträgt. Eine zu geringe Tiefe wiederum ist nachteilig, weil zwischen der Antennenspule und dem umgebenden leitenden Material noch ein Abstand von mindestens 1 mm, besser mindestens 1.5 mm verbleiben soll, damit sich die Feldlinien um die Windungen der Antennenspule herum ausbilden können.

Die zylindrische Aussparung ist vorzugsweise zu einer Stirnfläche des ersten Bauteils hin offen. Um eine effiziente Signalübertragung zu gewährleisten, sollte in diesem Fall die erste Antennenspule in der Aussparung möglichst öffnungsnah angeordnet sein. Insbesondere sollte die erste Antennenspule einen lichten Abstand von höchstens 2 mm, bevorzugt höchstens 1.5 mm zur stirnseitigen Öffnung der zylindrischen Aussparung haben.

Die zylindrische Aussparung kann ein Sackloch in einer Stirnfläche des ersten Bauteils bilden, das an seinem öffnungsfernen Ende geschlossen ist (gegebenenfalls abgesehen von einer Durchführbohrung für Kabel usw.). An das öffnungsferne Ende der zylindrischen Aussparung kann sich in axialer Richtung aber auch eine zentrale Bohrung geringeren Durchmessers anschliessen. In diesem Fall kann die zylindrische Aussparung auch als ringförmige Ausfräsung am stirnseitigen Ende der Bohrung aufgefasst werden. In nochmals anderen Ausführungsformen ist auch denkbar, dass die zylindrische Aussparung selbst die Form einer Ringnut in einer Stirnfläche des ersten Bauteils aufweist. In nochmals anderen Ausführungsformen kann die zylindrische Aussparung eine Ringnut in einer Mantelwand einer zylindrischen Bohrung oder eine Ringnut in einer äusseren zylindrischen Mantelwand bilden, an die sich axial beidseitig leitendes Material anschliesst.

In die zylindrische Aussparung hinein kann sich ein Bereich des zweiten Bauteils aus elektrisch leitendem Material, insbesondere ein metallischer Bereich dieses Bauteils, erstrecken, um die zylindrische Aussparung zu einem zylindrisch-ringförmigen Hohlraum zu schliessen. Wenn sich an die zylindrische Aussparung in axialer Richtung (einseitig oder beidseitig) eine Bohrung geringeren Durchmessers anschliesst, ist es bevorzugt, dass sich der zylindrische Bereich des zweiten Bauteils nicht nur durch die zylindrische Aussparung hindurch, sondern zusätzlich auch in diese Bohrung hinein erstreckt. Eine solche Ausführungsform ist insbesondere dann von Vorteil, wenn das erste Bauteil auf das zweite Bauteil axial aufgeschoben wird, um die beiden Bauteile miteinander zu verbinden.

Die zylindrische Aussparung kann mit einer elektrisch isolierenden Vergussmasse ausgegossen sein, um die Antennenspule in der Aussparung zu fixieren. Auf diese Weise kann auch verhindert werden, dass unerwünschte Stoffe wie z.B. Betriebsflüssigkeiten in die Aussparung gelangen.

In einer möglichen Ausführungsform stehen sich zwei zylindrische Aussparungen axial oder radial gegenüber. Das erste Bauteil weist dann also einen Bereich aus elektrisch leitendem Material, insbesondere aus Metall, mit einer ersten zylindrischen Aussparung auf, die zum zweiten Bauteil hin offen ist. Das zweite Bauteil weist einen Bereich aus elektrisch leitendem Material, insbesondere aus Metall, mit einer zweiten zylindrischen Aussparung auf, die zum ersten Bauteil hin offen ist. Die erste zylindrische Aussparung und die zweite zylindrische Aussparung definieren dann eine gemeinsame Zylinderachse und stehen sich derart axial oder radial gegenüber, dass sie gemeinsam einen zylindrischen Hohlraum begrenzen. Wenn sich die Aussparungen axial gegenüberstehen, sind die erste Antennenspule und die zweite Antennenspule konzentrisch zur gemeinsamen Zylinderachse im Hohlraum angeordnet und stehen sich vorzugsweise axial gegenüber. Wenn sich die Aussparungen radial gegenüberstehen, sind die erste Antennenspule und die zweite Antennenspule ebenfalls konzentrisch zur gemeinsamen Zylinderachse im Hohlraum angeordnet, und eine der Antennenspule umgibt vorzugsweise die andere Antennenspule radial.

Die erste und/oder zweite Antennenspule kann in Form von einer oder mehreren gedruckten Windungen auf einer elektrisch isolierenden, flachen Leiterplatte angeordnet sein. Dadurch ist es möglich, die Antennenspulen sehr einfach auf reproduzierbare Weise herzustellen und mit weiteren Komponenten zu verbinden. So können auf der Leiterplatte eine oder mehrere weitere elektrische oder elektronische Komponenten angebracht sein, insbesondere eine oder mehrere Komponenten wie Kondensatoren und/oder Widerstände zur Impedanzanpassung, eine Buchse zum Anschluss eines Koaxialkabels und/oder ein RFID-Transponder. Bevorzugt sind alle weiteren elektrischen oder elektronischen Komponenten auf einer von den Windungen abgewandten Seite der Leiterplatte angeordnet. Auf diese Weise können die Windungen ohne störende Komponenten öffnungsnah im jeweiligen Bauteil angeordnet werden. Um eine genügende Festigkeit auch bei hohen Drehzahlen sicherzustellen, ist die Leiterplatte vorzugsweise glasfaserverstärkt. Die Leiterplatte ist bevorzugt ringförmig ausgebildet, mit einer zentralen Öffnung.

Mit der ersten oder zweiten Antennenspule kann ein elektronisches Sende- und/oder Empfangsmodul elektrisch verbunden sein. Dieses Sende- und/oder Empfangsmodul kann eine Sende- und/oder Empfangsfrequenz von mehr als 5 MHz aufweisen. Bei dem Sende- und/oder Empfangsmodul kann es sich insbesondere um eine RFID-Komponente handeln, insbesondere um einen RFID-Transponder oder um eine RFID-Lese-/Schreibeinheit (auch als RFID-Reader oder RFID-Transceiver bezeichnet). Die Sende- und/oder Empfangsfrequenz kann insbesondere 13.56 MHz betragen. Wenn es sich bei der RFID-Komponente um einen RFID-Transponder handelt und die Antennenspule in Form von gedruckten Windungen auf einer Leiterplatte ausgebildet ist, ist der Transponder bevorzugt auf dieser Leiterplatte angeordnet. Wenn es sich um eine RFID-Lese-/Schreibeinheit handelt, ist diese dagegen bevorzugt räumlich entfernt von der Antennenspule angeordnet und mit dieser über ein Kabel, bevorzugt ein Koaxialkabel, verbunden.

Das elektronische Sende- und/oder Empfangsmodul kann mit einem Speichermodul verbunden sein oder ein integriertes Speichermodul aufweisen, auf dem bauteilrelevante Daten gespeichert sind, z.B. eine Identifikationsnummer, Bauteildaten wie Abmessungen, Materialangaben, Einsatzzweck usw., und/oder Daten zur Benutzung des Bauteils wie z.B. Betriebszeitdaten usw. Das Speichermodul kann dazu vorgesehen sein, Daten im Betrieb nicht nur zu lesen, sondern auch zu schreiben (wie dies z.B. bei EEPROM- oder FRAM-Speichern möglich ist). Es ist aber auch denkbar, das Sende- und/oder Empfangsmodul zu anderen Zwecken als zum reinen Auslesen von gespeicherten Daten vorzusehen, z.B. zur Übertragung von Sensordaten. Dazu kann die Werkzeugmaschine bzw. das betreffende Bauteil mindestens einen Sensor aufweisen, z.B. einen linearen Beschleunigungssensor oder einen Gyrosensor (Winkelbeschleunigungssensor), einen Temperatursensor, einen Drucksensor, einen Näherungssensor usw., der am ersten oder zweiten Bauteil angeordnet ist und der elektrisch mit dem am selben Bauteil angeordneten Sende- und/oder Empfangsmodul verbunden ist, um Sensordaten zu übertragen.

Ein Sende- und/oder Empfangsmodul kann aber auch erst an einem weiteren, dritten Bauteil angeordnet sein, wobei dann das zweite Bauteil nur zur Signalweiterleitung zwischen dem ersten und dem dritten Bauteil dient, ohne selbst notwendigerweise Sende- und/oder Empfangsmodule zu tragen.

Erfindungsgemäss zeichnet sich die Werkzeugmaschine dadurch aus,
dass mit dem zweiten Bauteil ein auswechselbares drittes Bauteil verbunden ist;
dass das zweite Bauteil eine dritte Antennenspule aufweist, die elektrisch mit der zweiten Antennenspule verbunden ist;
dass das dritte Bauteil eine vierte Antennenspule aufweist;
dass das zweite Bauteil und das dritte Bauteil gemeinsam einen weiteren Hohlraum definieren, der im Wesentlichen vollständig von einem elektrisch leitenden Material, insbesondere einem Metall, umgeben ist, und
dass die dritte Antennenspule und die vierte Antennenspule gemeinsam im weiteren Hohlraum angeordnet sind, um eine drahtlose Signalübertragung zwischen der dritten Antennenspule und der vierten Antennenspule zu ermöglichen.

In diesem Fall kann die Werkzeugmaschine z.B. eine RFID-Lese-/Schreibeinheit aufweisen, die elektrisch mit der ersten Antennenspule verbunden ist, und das dritte Bauteil kann einen RFID-Transponder aufweisen, der elektrisch mit der vierten Antennenspule verbunden ist. Beim Auslesen des RFID-Transponders werden dementsprechend elektrische Signale von der RFID-Lese-/Schreibeinheit drahtgebunden an die erste Antennenspule geleitet. Diese werden drahtlos an die zweite Antennenspule übertragen. Von dort gelangen die Signale drahtgebunden an die dritte Antennenspule, von wo sie drahtlos an die vierte Antennenspule übertragen werden. Schliesslich gelangen die Signale von dort an den RFID-Transponder. Das System kann um weitere Bauteile mit jeweils zwei elektrisch verbundenen Antennenspulen erweitert werden, um Signale zwischen noch mehr Bauteilen zu übertragen.

Die zweite und die dritte Antennenspule sind durch mindestens ein Kabel, bevorzugt ein Koaxialkabel, verbunden, welches vollständig im Innern des zweiten Bauteils verläuft. Auf diese Weise wird eine Beschädigung des Kabels im Betrieb vermieden. Das Kabel kann insbesondere durch eine Kabelführungsbohrung verlaufen, die mit einer Vergussmasse ausgefüllt ist. Als Vergussmassen kommen in der Regel sehr harte Giessharze zum Einsatz, wie sie im Rotorbau oder Isolatorenbau üblich sind. Zur Erreichung von Wärmeausdehnungskoeffizienten, die sich nahe bei denen des umgebenden Metalls befinden, werden häufig sehr hohe mineralische Füllungen in der Vergussmasse vorgesehen, die beim Aushärten einen nicht unerheblichen chemischen Volumenschwund verursachen. Um zu vermeiden, dass dadurch übermässige Zugkräfte auf das Kabel wirken, kann das Kabel locker vor dem Einfüllen der Vergussmasse von einem Schlauch (z.B. einem handelsüblichen Schrumpfschlauch) umgeben werden, so dass das Kabel beim Aushärten der Vergussmasse im Schlauch gleiten kann und dadurch zugentlastet ist.

Wie schon erwähnt, ist es denkbar, dass das zweite Bauteil dazu ausgebildet ist, um eine Drehachse drehbar an der Werkzeugmaschine angeordnet zu werden. Die Kabelführungsbohrung kann dann zumindest bereichsweise dezentral von der Drehachse entfernt verlaufen. Um Unwucht zu minimieren, kann dann das Bauteil eine Ausgleichsbohrung aufweisen, die im Wesentlichen identisch zur Kabelführungsbohrung ausgestaltet ist, die aber bezüglich der Drehachse um 180° versetzt zur Kabelführungsbohrung verläuft. Diese ist dann ebenfalls mit der Vergussmasse ausgefüllt.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: ein Abrichtwerkzeug mit RFID-Tag;
- Fig. 2: eine vergrösserte Ansicht des Details A der Fig. 1;
- Fig. 3: eine Abrichteinrichtung mit einem Abrichtwerkzeug nach Fig. 1 und mit einem RFID-Reader;
- Fig. 4: eine vergrösserte Ansicht des Details A der Fig. 3;
- Fig. 5: eine vergrösserte Ansicht des Details B der Fig. 3;
- Fig. 6: eine Darstellung zur Illustration der Übertragungsstrecken in der Abrichteinrichtung der Fig. 3;
- Fig. 7: einen zentralen Längsschnitt durch den Bereich B der Fig. 6;
- Fig. 8: eine erste Ausführungsform einer ringförmigen Leiterplatte;
- Fig. 9: eine zweite Ausführungsform einer ringförmigen Leiterplatte;
- Fig. 10: eine dritte Ausführungsform einer ringförmigen Leiterplatte;
- Fig. 11: eine erste Variante eines Spannmittels für Zahnräder, mit RFID-Tag;
- Fig. 12: eine vergrösserte Ansicht des Details A der Fig. 11;
- Fig. 13: eine zweite Variante eines Spannmittels für Zahnräder, mit RFID-Tag;
- Fig. 14: eine vergrösserte Ansicht des Details B der Fig. 13;
- Fig. 15: eine vergrösserte Ansicht des Details C der Fig. 13;
- Fig. 16: eine Werkstückspindel mit einem Spannmittel gemäss der ersten Variante nach Fig. 11;
- Fig. 17: eine vergrösserte Ansicht des Details A der Fig. 16;
- Fig. 18: eine vergrösserte Ansicht des Details B der Fig. 16;
- Fig. 19: eine Darstellung zu Illustration der Übertragungsstrecken in der Werkstückspindel der Fig. 16; und
- Fig. 20: eine vergrösserte Ansicht des Details B der Fig. 19;
- Fig. 21: eine vierte Ausführungsform einer ringförmigen Leiterplatte.

### BESCHREIBUNG BEVORZUGTER AUSFÜHRUNGSFORMEN

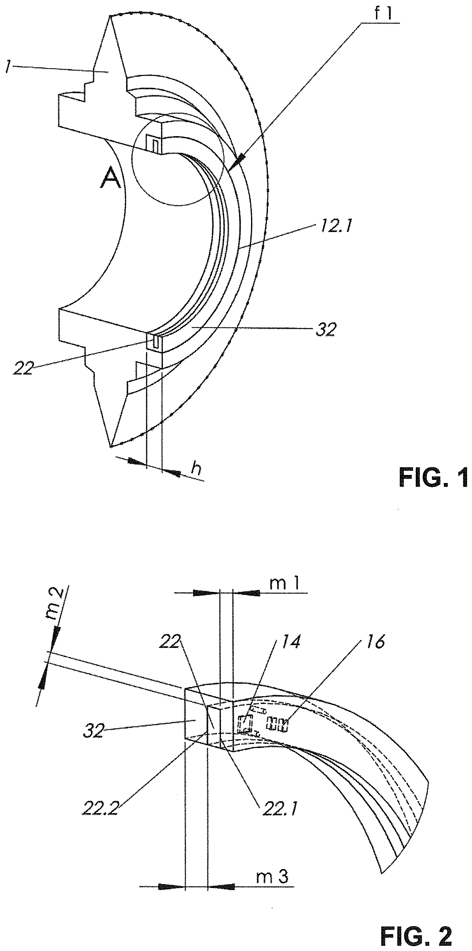

In den Figuren 1 bis 10 ist in verschiedenen Ansichten eine Abrichteinrichtung als ein erstes Beispiel für eine erfindungsgemässe Werkzeugmaschine mit einer metallgeschützten Funkstrecke illustriert.

Die Abrichteinrichtung weist ein auswechselbares, drehbares Bauteil in Form einer Abrichtscheibe 1 auf, die in der Figur 1 alleine dargestellt ist. Die Abrichtscheibe 1 weist eine zentrale Bohrung auf, an deren einem stirnseitigen Ende eine zylindrische Aussparung 12.1 mit einem Durchmesser f1 und einer axialen Tiefe h = 6 mm ausgebildet ist. In der zylindrischen Aussparung 12.1 ist eine ringförmige erste Leiterplatte 22 angeordnet. Der verbleibende Raum in der zylindrischen Aussparung 12.1 ist mit einer Vergussmasse 32 ausgefüllt. Diese Vergussmasse ist elektrisch nicht leitend, sehr hart und dadurch für den Einsatz in einem schnell rotierenden Bauteil geeignet.

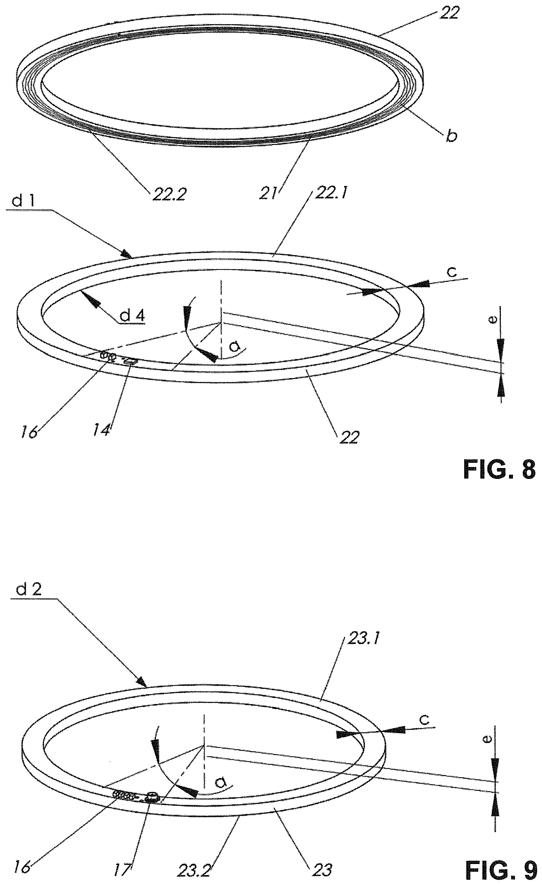

Die erste Leiterplatte 22 ist in der Figur 8 separat dargestellt. Auf der Unterseite 22.2 der Leiterplatte ist eine Antennenspule 21 in Form von mehreren gedruckten Windungen ausgebildet. Die Windungen nehmen insgesamt einen ringförmigen Bereich von einer Breite b ein. Auf der Oberseite 22.1 der Leiterplatte 22 sind mehrere elektronische Komponenten angebracht, darunter ein RFID-Tag 14, der eine Sende-/Empfangseinrichtung bildet und einen integrierten FRAM-Speicher aufweist, sowie mehrere Komponenten wie Kondensatoren 16 zur Impedanzanpassung. Diese elektronischen Komponenten sind in einem begrenzten Winkelbereich a entlang der Umfangsrichtung angeordnet, welcher im vorliegenden Beispiel weniger als ca. 30° beträgt. Die Leiterplatte 22 weist eine Dicke e = 1.6 mm, einen je nach Anwendung beliebig wählbaren Aussendurchmesser dl, eine Ringbreite c = 5 mm und einen Innendurchmesser d4 = d1 - 2c auf. Sie ist aus einem glasfaserverstärktem Kunststoff hergestellt.

Wie in Figur 2 illustriert ist, weist die Oberseite 22.1 der Leiterplatte 22 in axialer Richtung einen lichten Abstand m1 = 1.5 mm zur stirnseitigen Oberfläche der Abrichtscheibe auf. Auf der anderen axialen Seite weist die Unterseite 22.2 der Leiterplatte einen Abstand m3 = 2.9 mm zum metallischen Material der Abrichtscheibe 1 auf. Radial ist der äussere Rand der Leiterplatte in einem Abstand m2 = 1.5 mm zum metallischen Material der Abrichtscheibe 1 angeordnet.

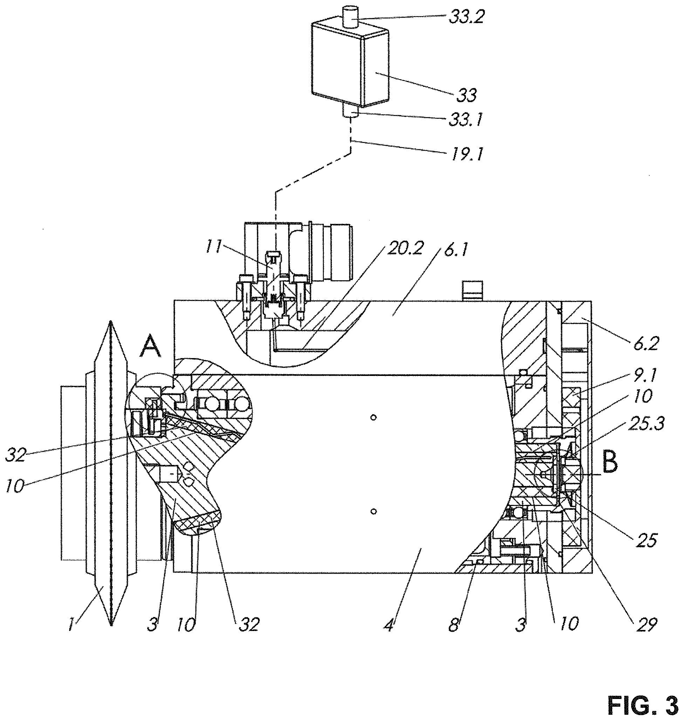

Die Abrichtscheibe 1 ist auf dem distalen Ende einer drehbaren Abrichtspindel 3 aufgespannt. Dies ist in der Figur 3 illustriert. Dabei kann die Abrichtscheibe 1 eine beliebige Winkelposition gegenüber der Abrichtspindel 3 einnehmen.

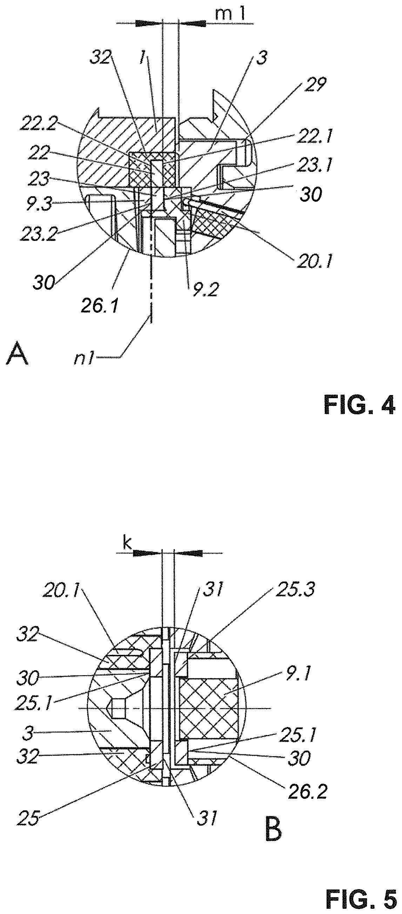

Wie in der Figur 4 illustriert, ist am Aussenumfang des distalen Endes der Abrichtspindel 3 eine ringförmige zweite Leiterplatte 23 angeordnet und ist dort durch nicht leitende Halter 9.2 und 9.3 gehalten. Die zweite Leiterplatte 23 ist beidseitig mittels eines nichtleitenden Klebstoffs 30 mit den beiden Haltern 9.2. und 9.3 verklebt. Dadurch sind sämtliche elektrisch leitenden Bereiche der zweiten Leiterplatte mittels nichtleitender Materialien vor Kriechströmen und Potentialunterschieden geschützt.

Die zweite Leiterplatte 23 ist in der Figur 9 alleine dargestellt. Sie trägt auf ihrer Unterseite 23.2 wiederum eine in der Figur 9 nicht sichtbare Antennenspule, die durch mehrere gedruckte Windungen gebildet ist. Diese ist genauso wie die Antennenspule 21 der Figur 8 ausgebildet. Auf ihrer Oberseite 23.1 trägt die Leiterplatte 23 wiederum mehrere Kondensatoren 16 zur Impedanzanpassung sowie eine miniaturisierte Buchse zur Verbindung mit dem Stecker eines Koaxialkabels. Diese elektronischen Komponenten beanspruchen wiederum einen begrenzten Winkelbereich a < 30°. Die Ringbreite c und die Dicke e der zweiten Leiterplatte 23 sind gleich gewählt wie bei der ersten Leiterplatte 22.

Die erste Leiterplatte 22 ist konzentrisch zur zweiten Leiterplatte 23 und zur Drehachse der Abrichtspindel 3 angeordnet und umgibt die zweite Leiterplatte 23 radial. Dabei liegen die beiden Antennenspulen, die auf der ersten und zweiten Leiterplatte 22 bzw. 23 ausgebildet sind, in einer gemeinsamen Ebene nl. Der Aussendurchmesser d2 der zweiten Leiterplatte 23 ist nur ganz geringfügig kleiner als der Innendurchmesser d4 der ersten Leiterplatte, so dass die beiden Leiterplatten einen sehr kleinen Spalt von weniger als 1 mm zwischen sich bilden. Durch die konzentrische Anordnung der Leiterplatten bzw. der Antennenspulen ist es möglich, Signale zwischen den Antennenspulen bei einer beliebigen Orientierung der Abrichtscheibe 1 gegenüber der Abrichtspindel 3 zu übertragen.

Die Abrichtscheibe 1 und die Abrichtspindel 3 begrenzen gemeinsam einen ringförmigen Hohlraum, in dem die beiden Leiterplatten 22 und 23 angeordnet sind. Der Hohlraum ist allseitig von dem elektrisch leitenden Metall der Abrichtscheibe 1 und der Abrichtspindel 3 umschlossen. Insbesondere schliesst die Abrichtspindel 3 die zylindrische Aussparung 12.1 allseitig ab. Zwischen den Antennenspulen der Leiterplatten 22 und 23 ist somit eine Funkstrecke 26.1 zur Signalübertragung ausgebildet, die durch das umliegende Metall der Abrichtscheibe 1 und der Abrichtspindel 3 vor äusseren störenden Einflüssen geschützt ist. Zudem können keine Betriebsflüssigkeiten wie Kühlmittel oder Schleifschlamm in den Bereich dieser metallgeschützten Funkstrecke 26.1 gelangen, da die Abrichtscheibe 1 dichtend auf der Abrichtspindel 3 aufliegt.

Störungen in der Signalübertragung könnten nicht nur durch Betriebsflüssigkeiten verursacht werden, sondern auch durch Kondensation von Feuchtigkeit im Bereich der Funkstrecke 26.1. Um noch besser zu vermeiden, dass Betriebsflüssigkeiten in den Hohlraum eindringen oder dass Feuchtigkeit im Hohlraum kondensiert, kann ein Bereich 29 zwischen der Abrichtspindel 3 und dem Gehäuse der Abrichteinrichtung zusätzlich mit Sperrluft unter leichtem Überdruck versehen werden.

Eine zweite metallgeschützte Funkstrecke 26.2 zwischen zwei weiteren Antennenspulen ist am proximalen Ende der Abrichtspindel 3 ausgebildet. Diese ist in der Figur 5 näher illustriert. Dazu ist am proximalen Ende der Abrichtspindel 3 stirnseitig eine zylindrische Aussparung ausgebildet, in die eine ringförmige dritte Leiterplatte 25 eingelegt ist. Die dritte Leiterplatte 25 schliesst mit ihrer Unterseite bündig mit der proximalen Stirnseite der Abrichtspindel 3 ab. Die dritte Leiterplatte 25 ist mit ihrer Oberseite 25.1 mittels eines elektrisch nicht leitenden Klebstoffs 30 in der Aussparung gehalten. Auf der Unterseite ist die dritte Leiterplatte durch einen elektrisch nicht leitenden Schutzlack geschützt.

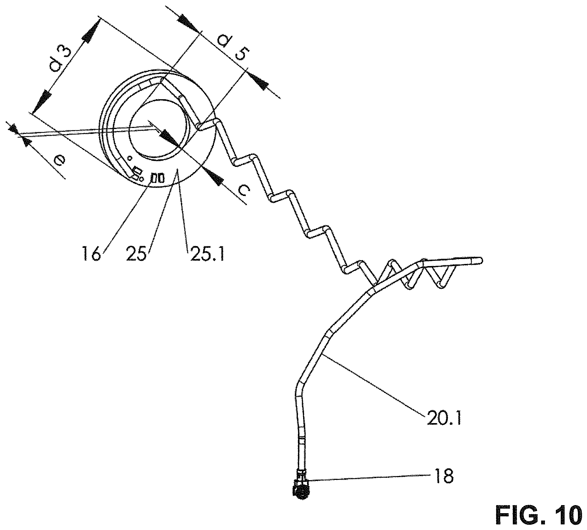

Die dritte Leiterplatte 25 ist in der Figur 10 alleine dargestellt. Sie weist auf ihrer Unterseite wiederum eine Antennenspule in Form von gedruckten Windungen auf (in der Figur 10 nicht erkennbar). Auf ihrer Oberseite 25.1 sind wiederum elektronische Komponenten wie Kondensatoren 16 zur Impedanzanpassung angebracht. Zudem ist auf der Oberseite 25.1 direkt ein Koaxialkabel 20.1 aufgelötet. Dieses weist an seinem anderen Ende einen miniaturisierten Stecker 18 auf. Die dritte Leiterplatte 25 weist einen Aussendurchmesser d3 = 15 mm, einen Innendurchmesser d5 = 5 mm, eine Ringbreite c = 5 mm und eine Dicke e = 1.6 mm auf.

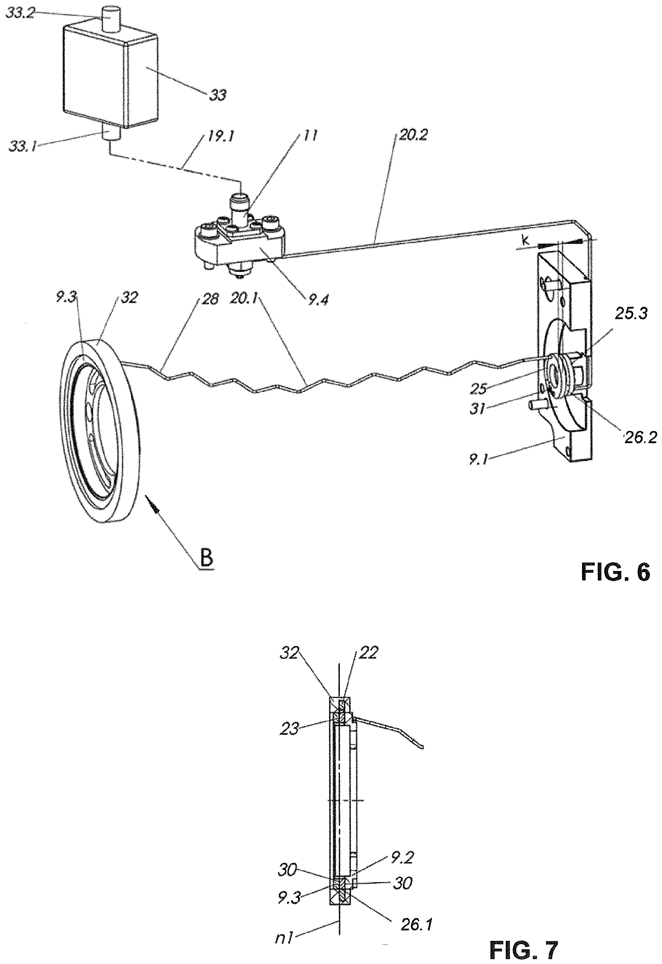

Wie insbesondere in der Figur 6 erkennbar ist, verbindet das Koaxialkabel 20.1 die zweite Leiterplatte 23 mit der dritten Leiterplatte 25. Dazu ist der Stecker 18 in die Buchse 17 der zweiten Leiterplatte 23 eingesteckt. Das Kabel 20.1 verläuft durch eine dezentral angeordnete Bohrung 10 im Inneren der Abrichtspindel 3. Diese Bohrung ist mit einer Vergussmasse 32 ausgegossen. Um zu vermeiden, dass durch die Schrumpfung der Vergussmasse beim Aushärten übermässige Zugkräfte auf das Kabel 20.1 wirken, ist das Kabel locker von einem Schrumpfschlauch 28 umgeben. Dadurch kann das Kabel beim Aushärten der Vergussmasse im Schrumpfschlauch gleiten. Zu einer wirksamen Zugentlastung trägt ausserdem bei, dass das Kabel in dem Bereich, in dem es den Stecker 18 verlässt, tangential zur Umfangsrichtung ausgerichtet ist.

Eine zweite, identische Bohrung 10 verläuft in Umfangsrichtung um 180° versetzt von der ersten Bohrung durch die Abrichtspindel 3. Auch diese Bohrung ist mit der Vergussmasse 32 ausgegossen. Auf diese Weise wird Unwucht so weit wie möglich vermieden.

Mit dem Gehäuse 4 der Abrichteinrichtung ist ein nichtleitender Halter 9.1 verbunden. An diesem Halter ist eine ringförmige vierte Leiterplatte 25.3 befestigt. Diese ist im Wesentlichen gleich wie die dritte Leiterplatte 25 ausgebildet und weist lediglich einen geringfügig kleineren Aussendurchmesser als die Leiterplatte 25 auf. Die Oberseite der vierten Leiterplatte 25.3 ist durch einen nicht leitenden Klebstoff 30 mit dem Halter 9.1 verbunden. Auf der Unterseite der vierten Leiterplatte 25.3 ist wiederum ein Schutzlack aufgebracht. Die Antennenspulen auf der dritten Leiterplatte 25 und der vierten Leiterplatte 25.3 sind jeweils koaxial zur Drehachse angeordnet und stehen sich axial in einem Abstand k = 1...3 mm gegenüber. Die beiden Leiterplatten sind dabei so ausgerichtet, dass ihre Antennenspulen zueinander hin weisen, d.h. die Unterseiten der beiden Leiterplatten stehen sich axial gegenüber.

Von der vierten Leiterplatte 25.3 verläuft ein Koaxialkabel 20.2 zu einem Kabelhalter 11, der mit einem elektrisch nicht leitenden Halter 9.4 an einem Gehäuseteil 6.1 der Abrichteinrichtung befestigt ist. Über ein weiteres Koaxialkabel 19.1 ist der Kabelhalter 11 mit dem Eingang 33.1 eines RFID-Readers 33 verbunden. Am Ausgang 33.2 des RFID-Readers 33 können über ein weiteres, nicht dargestelltes Kabel Daten zur weiteren Verwendung ausgelesen werden.

Wie in der Figur 3 erkennbar ist, ragt in den Halter 9.1 ein metallisches Zahnrad am proximalen Ende der Abrichtspindel 3 hinein. Das proximale Ende der Abrichteinrichtung ist mit einer metallischen Endkappe 6.2 verschlossen. Diese liegt umlaufend auf einem metallischen Bereich des Gehäuses 4 der Abrichteinrichtung auf. Die Abrichtspindel 3, das Zahnrad an ihrem proximalen Ende, das Gehäuse 4 und die Endkappe 6.2 begrenzen gemeinsam einen Hohlraum, in dem die dritte Leiterplatte 25 und die vierte Leiterplatte 25.3 angeordnet sind. Dieser Hohlraum ist allseitig von dem elektrisch leitenden Metall der Abrichtspindel 3, des Zahnrads, des Gehäuses 4 und der Endkappe 6.2 umschlossen. Dadurch ist die zweite Funkstrecke 26.2 zwischen den Antennenspulen der Leiterplatten 25 und 25.3 ebenfalls durch Metall geschützt. Auch am proximalen Ende der Abrichtspindel kann in einem Bereich 29 Sperrluft unter leichten Überdruck eingespeist werden, um das Eindringen von Betriebsflüssigkeiten in den Hohlraum und die Bildung von Kondensationsfeuchtigkeit zu verhindern.

Im Betrieb erzeugt der RFID-Reader 33 ein hochfrequentes Auslesesignal (z.B. bei einer Trägerfrequenz von 13.56 MHz), das durch das Kabel 19.1, den Kabelhalter 11 und das Kabel 20.2 an die Antennenspule der vierten Leiterplatte 25.3 gelangt. Hier wird das Signal drahtlos über die zweite metallgeschützte Funkstrecke 26.2 zur Antennenspule auf der dritten Leiterplatte 25 übertragen. Diese Übertragung ist selbst dann möglich, wenn die Abrichtspindel 3 rotiert, da die Übertragung vom feststehenden Bereich der Maschine auf die Spindel über Antennenspulen erfolgt, die koaxial mit der Drehachse angeordnet sind.

Von der dritten Leiterplatte 25 gelangt das Signal über das Kabel 20.1 zur Antennenspule auf der zweiten Leiterplatte 23. Das Signal wird nun drahtlos über die erste metallgeschützte Funkstrecke 26.1 zur Antennenspule 21 auf der ersten Leiterplatte 22 übertragen. Hier wird das Signal vom RFID-Tag 14 empfangen. Der RFID-Tag kann nun in üblicher Weise ausgelesen werden, z.B. durch Lastmodulation, bei der der RFID-Tag in zeitlicher veränderlicher Weise seine Impedanz und damit auch die am RFID-Reader 33 messbare Impedanz der gesamten Übertragungsstrecke mit dem daran angeschlossenen RFID-Tag ändert, oder indem der RFID-Tag 33 selbst hochfrequente Signale in umgekehrter Richtung über die Übertragungsstrecke sendet.

Die Abrichteinrichtung weist in bekannter Weise einen Servomotor 8 zum Antrieb der Abrichtspindel 3 auf. Indem die Funkstrecken 26.1 und 26.2 metallgeschützt sind, sind sie auch gegen elektromagnetische Störungen, die möglicherweise vom Servomotor 8 herrühren können, geschützt.

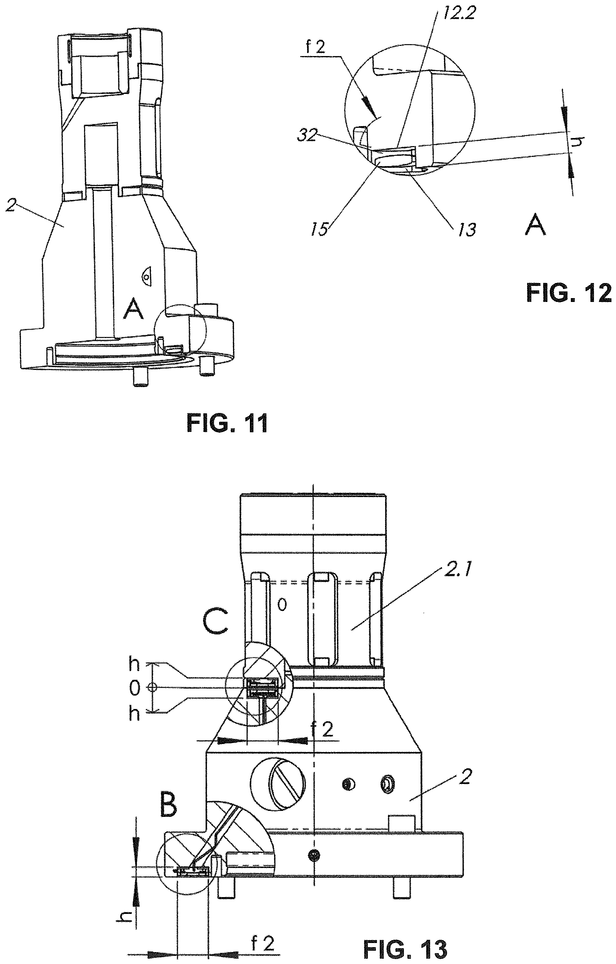

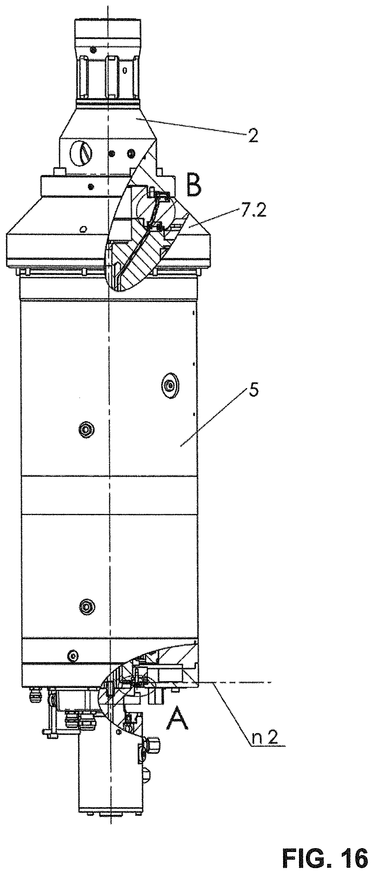

In den Figuren 11-15 sind zwei Varianten eines Spannmittels 2 illustriert. Die Figuren 16-21 illustrieren, als weiteres Beispiel für eine erfindungsgemässe Werkzeugmaschine, eine Werkstückspindel 5 mit der ersten Variante des Spannmittels 2. In gleicher Weise kann die Werkstückspindel 5 aber auch mit der zweiten Variante des Spannmittels bestückt werden.

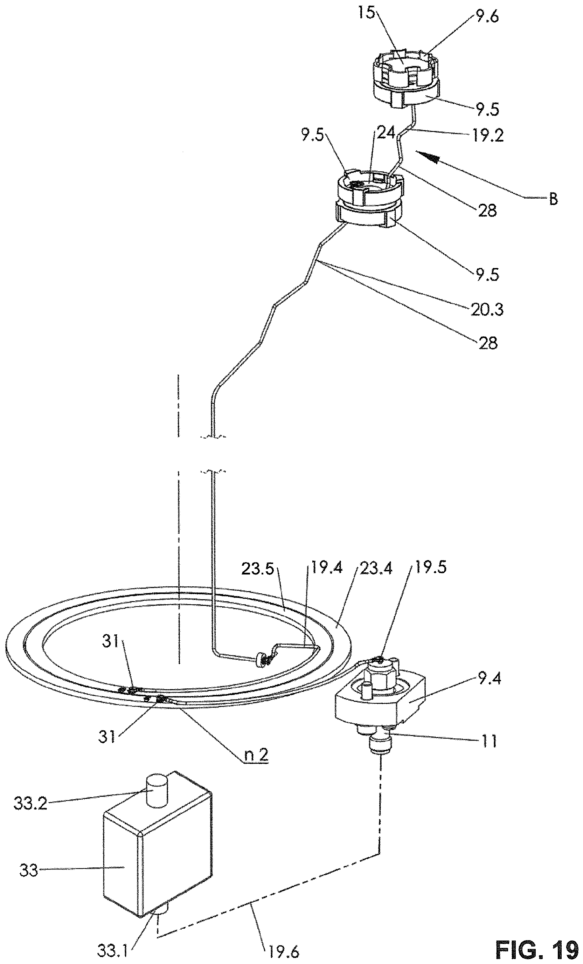

In der ersten Variante, die in den Figuren 11 und 12 dargestellt ist, weist das Spannmittel an seiner proximalen Stirnseite eine zylindrische Aussparung 12.2 mit einem Durchmesser von f2 = 19 mm und einer axialen Tiefe h = 6 mm auf. Die Aussparung 12.2 ist dezentral, d.h. entfernt von der Drehachse, angeordnet. In der Aussparung ist nahe der offenen Stirnfläche 13 ein handelsüblicher RFID-Tag 15 mit integrierter Antenne angeordnet und ist dort durch eine Vergussmasse 32 fixiert. Wie in der Figur 19 dargestellt, kann der RFID-Tag 15 zusätzlich in einem Halter 9.6 gehalten sein.

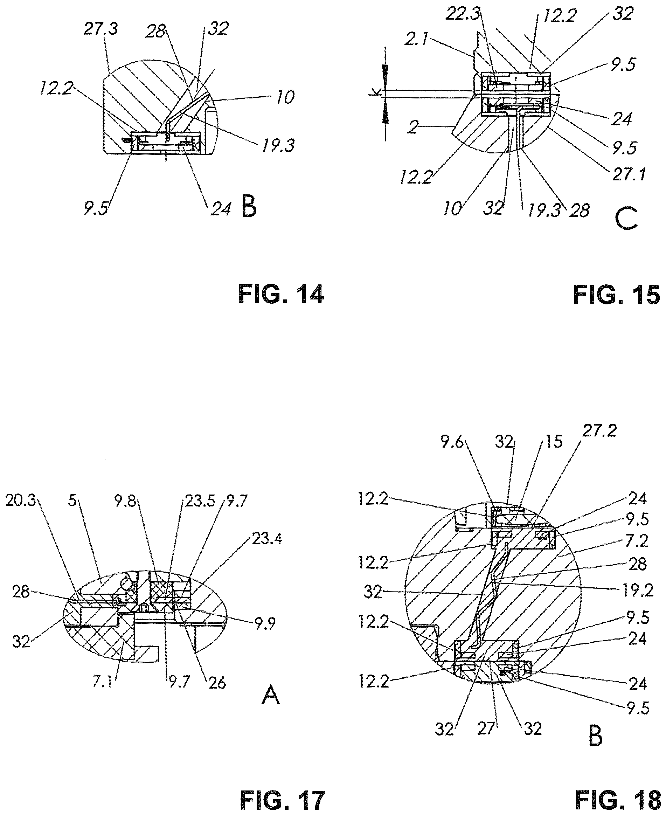

In der zweiten Variante, die in den Figuren 13-15 dargestellt ist, weist das Spannmittel 2 zwei Teile auf: eine Basis und einen abnehmbaren Aufsatz 2.1, der in einer festgelegten Orientierung an der Basis gehalten ist. In der proximalen Stirnseite des Aufsatzes 2.1 ist dezentral eine zylindrische Aussparung 12.2 mit denselben Abmessungen wie bei der ersten Variante ausgebildet (Figur 15). In dieser Aussparung befindet sich eine Leiterplatte 22.3 mit einem RFID-Tag. Die Leiterplatte 22.3 ist durch einen elektrisch nicht leitenden Halter 9.5 in der Aussparung 12.2 gehalten und durch eine Vergussmasse 32 fixiert. Statt der Leiterplatte 22.3 könnte auch ein handelsüblicher RFID-Tag mit integrierter Antenne, wie bei der ersten Variante, vorgesehen werden. Axial gegenüberstehend ist in der distalen Stirnseite der Basis eine identische zylindrische Aussparung 12.2 vorgesehen, in welcher eine gleich dimensionierte Leiterplatte 24 angeordnet und durch einen Halter 9.5 gehalten ist.

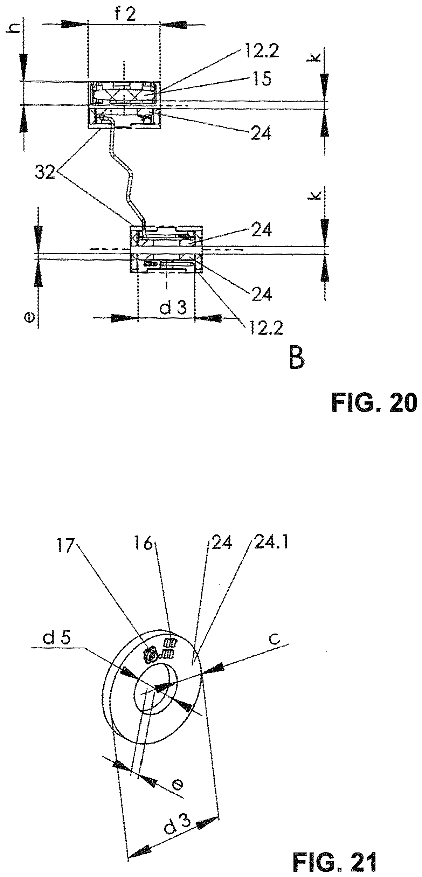

Die Leiterplatte 24 ist in der Figur 21 alleine dargestellt. Auf ihrer Unterseite ist eine nicht dargestellte Antennenspule ausgebildet, und auf ihrer Oberseite 24.1 befinden sich Komponenten wie Kondensatoren 16 zur Impedanzanpassung sowie eine miniaturisierte Koaxialbuchse 17.

Die Leiterplatte 22.3 im Aufsatz 2.1 und die Leiterplatte 24 in der distalen Stirnseite der Basis stehen sich axial gegenüber und bilden eine Funkstrecke 27.1. Diese befindet sich in einem Hohlraum, der durch die beiden zylindrischen Aussparungen 12.2 definiert wird und ringsum von Metall umgeben ist. Bei der Funkstrecke 27.1 handelt es sich also wiederum um eine metallgeschützte Funkstrecke. Da im Betrieb zwischen den Aussparungen 12.2 keine Relativbewegung stattfindet, können beide Aussparungen 12.2 komplett ausgossen werden. Damit kann sich innerhalb der Funkstrecke keine Kondensationsfeuchtigkeit bilden.

In der proximalen Stirnseite der Basis des Spannmittels 2 ist eine weitere zylindrische Aussparung 12.2 ausgebildet (Figur 14). Dort ist eine weitere ringförmige Leiterplatte 24 angeordnet, die identisch ausgebildet und befestigt ist wie die Leiterplatte 24 in der Aussparung in der distalen Stirnseite der Basis. Ein Koaxialkabel 19.3 verläuft durch eine Bohrung 10 zwischen diesen beiden Leiterplatten und ist mit miniaturisierten Steckern in den Koaxialbuchsen 17 der beiden Leiterplatten 24 eingesteckt. Die Bohrung 10 ist mit einer Vergussmasse 32 ausgegossen. Das Koaxialkabel 19.3 ist durch einen Schrumpfschlauch 28, der das Kabel lose umgibt, vor Zugbelastungen beim Aushärten der Vergussmasse geschützt.

In beiden Varianten ist das Spannmittel 2 auf einem Zwischenstück 7.2 an der Werkstückspindel 5 befestigt (Figur 16). Das Zwischenstück 7.2 nimmt relativ zur Werkstückspindel eine festgelegte Orientierung ein und ist von der Werkstückspindel abnehmbar. An der proximalen und distalen Stirnseite des Zwischenstücks 7.2 ist wiederum jeweils eine zylindrische Aussparung 12.2 ausgebildet, in der jeweils eine Leiterplatte 24 angeordnet ist. Diese sind wiederum durch ein Koaxialkabel 19.2 verbunden. Dies ist in Figur 18 illustriert. Die Aussparungen, die Leiterplatten, das Kabel usw. sind gleich ausgeführt wie die Verbindung der beiden Aussparungen 12.2 in der Basis der zweiten Variante des Spannmittels 2, und für weitere Details wird auf die obige Beschreibung des Spannmittels verwiesen.

Das Spannmittel 2 ist so auf das Zwischenstück 7.2 aufgesetzt, dass sich die zylindrischen Aussparungen 12.2 in der proximalen Stirnseite des Spannmittels 2 und in der distalen Stirnseite des Zwischenstücks 7.2 axial gegenüberstehen. Gemeinsam bilden diese Aussparungen einen Hohlraum. Bei der ersten Variante des Spannmittels bildet die Antennenspule der Leiterplatte 24 in der Aussparung in der distalen Stirnseite des Zwischenstücks gemeinsam mit dem RFID-Tag 15 in der Aussparung in der proximalen Stirnseite des Spannmittels eine metallgeschützte Funkstrecke 27.2. Bei der zweiten Variante des Spannmittels ist eine metallgeschützte Funkstrecke zwischen den beiden Antennenspulen der (identisch ausgebildeten) Leiterplatten 24 in den Aussparungen in der distalen Stirnseite des Zwischenstücks und in der proximalen Stirnseite des Spannmittels ausgebildet.

Auch in der distalen Stirnseite der Werkstückspindel 5 befindet sich eine zylindrische Aussparung 12.2 mit einer ringförmigen Leiterplatte 24 der oben beschriebenen Art. Die Antennenspule der Leiterplatte 24 steht axial der Antennenspule der Leiterplatte in der proximalen Stirnseite des Zwischenstücks 7.2 gegenüber und bildet mit dieser eine weitere metallgeschützte Funkstrecke 27.3.

Von der ringförmigen Leiterplatte 24 in der distalen Stirnseite der Werkstückspindel 5 verläuft ein Koaxialkabel durch die Werkstückspindel 5 hindurch zu einer weiteren ringförmigen Leiterplatte 23.5. Diese ist im Bereich des proximalen stirnseitigen Endes der Werkstückspindel 5 zwischen nichtleitenden Haltern 9.7 und 9.8 gehalten (Figur 17). An einem gehäusefesten Bauteil ist eine weitere Leiterplatte 23.4 angeordnet und zwischen nicht leitenden Haltern 9.7 und 9.9 gehäusefest fixiert. Auf den Leiterplatten 23.5 und 23.4 sind Antennenspulen ausgebildet, die in einer gemeinsamen Ebene n2 angeordnet sind. Die Antennenspule der Leiterplatte 23.4 umgibt die Antennenspule der Leiterplatte 23.5 radial. Die so entstehende Funkstrecke ist in einem Hohlraum angeordnet, der durch die Werkstückspindel 5, ein damit verbundenes Anbauteil 7.1 und das Gehäuse der Spindel begrenzt wird. Dadurch ist auch diese Funkstrecke durch Metall gegen Störungen geschützt.

Insgesamt sind dadurch im Bereich der Werkstückspindel mehrere metallgeschützte Funkstrecken vorhanden, nämlich in jedem Paar von gegenüberstehenden Aussparungen 12.2 sowie am proximalen Ende zwischen den Leiterplatten 23.4 und 23.5.

Die Funktionsweise ist ähnlich wie bei der oben beschriebenen Abrichteinrichtung und wird anhand der Figuren 19 und 20 erläutert. Von einem RFID-Reader 33 gelangen Signale über ein Kabel 19.6 und ein Kabel 19.5 zur Antennenspule auf der Leiterplatte 23.4. Die Signale werden drahtlos über eine metallgeschützte Funkstrecke auf die Antennenspule auf der Leiterplatte 23.5 am proximalen Ende der Werkzeugspindel 5 übertragen. Von dort gelangen die Signale über das Kabel 20.3 zur Antennenspule auf der Leiterplatte 24 am distalen Ende der Werkstückspindel 5. Von dort werden die Signale entweder über zwei weitere metallgeschützte Funkstrecken zum RFID-Tag 15 (erste Variante) oder über drei weitere metallgeschützte Funkstrecken zum RFID-Tag auf der Leiterplatte 22.3 (zweite Variante) übertragen. Die Übertragung ist selbst dann möglich, wenn die Werkstückspindel 5 rotiert, da die Übertragung vom feststehenden Bereich der Maschine auf die Spindel über Antennenspulen erfolgt, die koaxial mit der Drehachse angeordnet sind.

Insgesamt wird also die Übertragungsstrecke vom RFID-Reader 33 zum zugeordneten RFID-Tag durch eine Kombination von Kabelstrecken und metallgeschützten Funkstrecken gebildet. Auf diese Weise kann der RFID-Tag unter allen Betriebsbedingungen sicher ausgelesen werden.

Selbstverständlich sind eine Vielzahl von Abwandlungen möglich. Insbesondere können RFID-Tags auch auf anderen Wechselteilen als einer Abrichtscheibe oder einem Spannmittel vorgesehen werden, beispielsweise auf einer Schleifscheibe usw. So kann z.B. die Datenübertragung zu einer Schleifscheibe auf die gleiche Art wie bei einer Abrichtscheibe ausgeführt werden. Die einzelnen Funkstrecken können selbstverständlich auf andere Art als hier dargestellt ausgebildet werden, solange sichergestellt ist, dass sich die Funkstrecken jeweils in einem Hohlraum befinden, der im Wesentlichen vollständig von leitendem Material umgeben ist. Statt RFID-Tags mit integriertem Speicher können auch Sende- /Empfangseinheiten zum Einsatz kommen, die mit einem Sensor verbunden sind, z.B. mit einem Temperatur-, Druck-, Näherungs-, Beschleunigungs- oder Winkelbeschleunigungssensor. Eine Vielzahl weiterer Abwandlungen ist möglich.

### BEZUGSZEICHENLISTE

- 1: Abrichtscheibe
- 2: Spannmittel
- 2.1: Anbauteil Spannmittel
- 3: Abrichtspindel
- 4.: Gehäuse Abrichteinrichtung
- 5.: Werkstückspindel
- 6.1: Gehäuseteil
- 6.2: Endkappe
- 7.1: Anbauteil
- 7.2: Zwischenstück
- 8: Servomotor
- 9.1: Halter
- 9.2: Halter
- 9.3: Halter
- 9.4: Halter
- 9.5: Halter
- 9.6: Halter
- 9.7: Halter
- 9.8: Halter
- 9.9: Halter
- 10: Bohrung
- 11: Kabelhalter
- 12.1: Aussparung
- 12.2: Aussparung
- 13: Stirnfläche
- 14: RFID-Tag
- 15: RFID-Tag mit integrierter Antenne
- 16: Kondensator
- 17: Metallische Mini-Buchse
- 18: Metallischer Mini-Stecker
- 19.1: Koaxialkabel
- 19.2: Koaxialkabel
- 19.3: Koaxialkabel
- 19.4: Koaxialkabel
- 19.5: Koaxialkabel
- 20.1: Koaxialkabel
- 20.2: Koaxialkabel
- 20.3: Koaxialkabel
- 21: Antennenspule
- 22: Erste Leiterplatte
- 22.1: Oberseite
- 22.2: Unterseite
- 22.3: Leiterplatte
- 23: Leiterplatte
- 23.1: Oberseite
- 23.2: Unterseite
- 23.3: Leiterplatte
- 23.4: Leiterplatte
- 23.5: Leiterplatte
- 24: Leiterplatte
- 24.1: Oberseite
- 24.2: Unterseite
- 25: Leiterplatte
- 25.1: Oberseite
- 25.2: Unterseite
- 25.3: Leiterplatte
- 26.1: metallgeschützte Funkstrecke
- 26.2: metallgeschützte Funkstrecke
- 27.1: metallgeschützte Funkstrecke
- 27.2: metallgeschützte Funkstrecke
- 27.3: metallgeschützte Funkstrecke
- 28: Schrumpfschlauch
- 29: Sperrluft
- 30: Klebstoff
- 31: Schutzlack
- 32: Vergussmasse
- 33: RFID-Reader
- 33.1: Readereingang
- 33.2: Readerausgang

- a: Winkelbereich
- b: Breite der Ringfläche für die Antennenwindungen
- c: Breite der ringförmigen Leiterplatte
- d1: Aussendurchmesser der Leiterplatte
- d2: Aussendurchmesser der Leiterplatte
- d3: Aussendurchmesser der Leiterplatte
- d4: Innendurchmesser der Leiterplatte
- d5: Innendurchmesser der Leiterplatte
- e: Dicke der Leiterplatte
- f1: Durchmesser der zylindrischen Aussparung
- f2: Durchmesser der zylindrischen Aussparung
- h: Tiefe der zylindrischen Aussparung
- k: Länge der Funkstrecke
- m1: Abstand zum Metall
- m2: Abstand zum Metall
- nl: Antennenebene
- n2: Antennenebene

## Patentansprüche

1. Werkzeugmaschine, aufweisend
ein erstes Bauteil (4; 5), das eine erste Antennenspule (21) zur drahtlosen Signalübertragung aufweist, und
ein am ersten Bauteil (4; 5) entfernbar und/oder beweglich angeordnetes zweites Bauteil (3; 7.2), das eine zweite Antennenspule (21) zur drahtlosen Signalübertragung aufweist,
wobei das erste Bauteil (4; 5) und das zweite Bauteil (3; 7.2) gemeinsam einen Hohlraum begrenzen, der im Wesentlichen vollständig von einem elektrischen leitenden Material, insbesondere von einem Metall, umgeben ist, und
wobei die erste Antennenspule und die zweite Antennenspule (21) gemeinsam im Hohlraum angeordnet sind, um eine drahtlose Signalübertragung zwischen der ersten Antennenspule (21) und der zweiten Antennenspule (21) zu ermöglichen,
**dadurch gekennzeichnet,**
**dass** mit dem zweiten Bauteil (3; 7.2) ein auswechselbares drittes Bauteil (1; 2) verbunden ist;
**dass** das zweite Bauteil (3; 7.2) eine dritte Antennenspule (21) aufweist, die elektrisch durch ein Kabel (20.1; 19.2), bevorzugt ein Koaxialkabel, mit der zweiten Antennenspule (21) verbunden ist, wobei das Kabel (20.1; 19.2) vollständig im Innern des zweiten Bauteils (3; 7.2) verläuft;
**dass** das dritte Bauteil (1; 2) eine vierte Antennenspule (21) aufweist;
**dass** das zweite Bauteil (3; 7.2) und das dritte Bauteil (1; 2) gemeinsam einen weiteren Hohlraum definieren, der im Wesentlichen vollständig von einem elektrisch leitenden Material, insbesondere einem Metall, umgeben ist, und
**dass** die dritte Antennenspule (21) und die vierte Antennenspule (21) gemeinsam in dem weiteren Hohlraum angeordnet sind, um eine drahtlose Signalübertragung zwischen der dritten Antennenspule (21) und der vierten Antennenspule (21) zu ermöglichen.

2. Werkzeugmaschine nach Anspruch 1, wobei das dritte Bauteil (1; 2) einen RFID-Transponder (14; 15) aufweist, der elektrisch mit der vierten Antennenspule (21) verbunden ist und der eine Sende- und/oder Empfangsfrequenz von mehr als 5 MHz aufweist.

3. Werkzeugmaschine nach Anspruch 1 oder 2, wobei das erste Bauteil (4) und das zweite Bauteil (3) relativ zueinander um eine Drehachse drehbar sind, und wobei die erste Antennenspule und die zweite Antennenspule (21) derart angeordnet sind, dass eine drahtlose Signalübertragung zwischen der ersten Antennenspule und der zweiten Antennenspule (21) sowohl im Stillstand als auch während einer Drehung des zweiten Bauteils (3) gegenüber dem ersten Bauteil (4) möglich ist.

4. Werkzeugmaschine nach einem der vorhergehenden Ansprüche, wobei das erste Bauteil (4) und das zweite Bauteil (7.2) relativ zueinander um eine Drehachse drehbar sind, wobei die erste Antennenspule (21) eine erste Spulenachse definiert, wobei die zweite Antennenspule (21) eine zweite Spulenachse definiert, und wobei die erste Spulenachse und die zweite Spulenachse mit der Drehachse übereinstimmen.

5. Werkzeugmaschine nach Anspruch 1 oder 2, wobei das erste Bauteil (5) und das zweite Bauteil (7.2) gemeinsam gegenüber einem Maschinenbett um eine Drehachse drehbar sind, und wobei der Hohlraum konzentrisch mit der Drehachse oder dezentral in einem Abstand von der Drehachse angeordnet ist.

6. Werkzeugmaschine nach einem der vorhergehenden Ansprüche, wobei die erste Antennenspule (21) eine erste Spulenachse definiert, wobei die zweite Antennenspule (21) eine zweite Spulenachse definiert, und wobei die erste Spulenachse und die zweite Spulenachse zusammenfallen.

7. Werkzeugmaschine nach einem der vorhergehenden Ansprüche,
wobei zumindest das erste Bauteil (4; 5) einen Bereich aus elektrisch leitendem Material, vorzugsweise Metall, mit einer zylindrischen Aussparung (12.1; 12.2) aufweist,
wobei die zylindrische Aussparung (12.1; 12.2) eine Zylinderachse definiert und zu einer Oberfläche des ersten Bauteils (4; 5) hin eine Öffnung aufweist,
wobei die erste Antennenspule (21) konzentrisch zur Zylinderachse in einem öffnungsnahen Bereich der zylindrischen Aussparung (12.1; 12.2) angeordnet ist, und
wobei die zylindrische Aussparung (12.1; 12.2) durch das zweite Bauteil (3; 7.2) zu dem Hohlraum geschlossen ist.

8. Werkzeugmaschine nach Anspruch 7,
wobei das zweite Bauteil (3; 7.2) einen Bereich aus elektrisch leitendem Material mit einer zweiten zylindrischen Aussparung (12.1; 12.2) aufweist, die zum ersten Bauteil (4; 5) hin offen ist,
wobei die erste zylindrische Aussparung (12.1; 12.2) und die zweite zylindrische Aussparung (12.1; 12.2) eine gemeinsame Zylinderachse definieren und sich derart gegenüberstehen, dass sie gemeinsam einen zylindrischen Hohlraum begrenzen, und
wobei die erste Antennenspule (21) und die zweite Antennenspule (21) konzentrisch zur gemeinsamen Zylinderachse im Hohlraum angeordnet sind und sich axial gegenüberstehen oder sich radial umgeben.

9. Werkzeugmaschine nach einem der vorhergehenden Ansprüche, wobei die erste und/oder zweite Antennenspule (21) in Form von einer oder mehreren gedruckten Windungen auf einer elektrisch isolierenden, ringförmigen Leiterplatte (22; 23; 24; 25) mit einer zentralen Öffnung angeordnet sind.

10. Werkzeugmaschine nach Anspruch 9, wobei auf der ringförmigen Leiterplatte (22; 23; 24; 25) mindestens eine elektrische oder elektronische Komponente angebracht ist, insbesondere eine Komponente zur Impedanzanpassung (16) und/oder eine Buchse (17) zum Anschluss eines Koaxialkabels (20.1; 19.2), und wobei alle solchen elektrischen oder elektronischen Komponenten auf einer von den Windungen abgewandten Seite der ringförmigen Leiterplatte (22; 23; 24; 25) angeordnet sind.

11. Bauteil einer Werkzeugmaschine,
wobei das Bauteil (3; 7.2) eine Antennenspule (21) zur drahtlosen Signalübertragung aufweist, wobei die Antennenspule (21) eine Spulenachse definiert;
wobei das Bauteil (3; 7.2) einen Bereich aus elektrisch leitendem Material mit einer zylindrischen Aussparung (12.1; 12.2) aufweist, wobei die zylindrische Aussparung (12.1; 12.2) eine Zylinderachse definiert und zu einer Oberfläche des Bauteils hin offen ist, und
wobei die Antennenspule (21) in der zylindrischen Aussparung (12.1; 12.2) konzentrisch zur Zylinderachse angeordnet ist,
**dadurch gekennzeichnet, dass** das Bauteil (3; 7.2) eine weitere Antennenspule (21) aufweist;
dass die beiden Antennenspulen (21) elektrisch durch mindestens ein Kabel (20.1; 19.2), bevorzugt ein Koaxialkabel, verbunden sind; und
dass das Kabel (20.1; 19.2) vollständig im Innern des Bauteils (3; 7.2) verläuft.

12. Bauteil nach Anspruch 11, wobei die Antennenspule (21) in Form von einer oder mehreren gedruckten Windungen auf einer elektrisch isolierenden, ringförmigen Leiterplatte (22; 23; 24; 25) mit einer zentralen Öffnung angeordnet ist.

13. Bauteil nach Anspruch 12, wobei auf der ringförmigen Leiterplatte (22; 23; 24; 25) mindestens eine elektrische oder elektronische Komponente angebracht ist, insbesondere eine Komponente zur Impedanzanpassung (16) und/oder eine Buchse (17) zum Anschluss eines Koaxialkabels (20.1; 19.2), und wobei alle solchen elektrischen oder elektronischen Komponenten auf einer von den Windungen abgewandten Seite der ringförmigen Leiterplatte (22; 23; 24; 25) angeordnet sind.

14. Bauteil nach einem der Ansprüche 11 bis 13, wobei das Kabel (20.1; 19.2) durch eine Kabelführungsbohrung verläuft, die mit einer Vergussmasse (32) ausgefüllt ist, und wobei das Kabel (20.1; 19.2) locker von einem Schlauch umgeben ist, so dass das Kabel beim Aushärten der Vergussmasse (32) zugentlastet ist.

15. Bauteil nach Anspruch 14, wobei das Bauteil (3; 7.2) dazu ausgebildet ist, um eine Drehachse drehbar an der Werkzeugmaschine angeordnet zu werden, wobei die Kabelführungsbohrung zumindest bereichsweise dezentral von der Drehachse entfernt verläuft, und wobei das Bauteil (3; 7.2) eine Ausgleichsbohrung aufweist, die im Wesentlichen identisch zur Kabelführungsbohrung ausgestaltet ist, bezüglich der Drehachse um 180° versetzt zur Kabelführungsbohrung verläuft und ebenfalls mit der Vergussmasse ausgefüllt ist.

## Claims

1. A machine tool, comprising:
a first component (4; 5) which comprises a first antenna coil (21) for wireless signal transmission, and
a second component (3; 7.2), which is removably and/or movably arranged on the first component (4; 5) and comprises a second antenna coil (21) for wireless signal transmission,
wherein the first component (4; 5) and the second component (3; 7.2) together bound a cavity which is surrounded essentially completely by an electrically conductive material, in particular by a metal, and
wherein the first antenna coil and the second antenna coil (21) are arranged together in the cavity in order to permit wireless signal transmission between the first antenna coil (21) and the second antenna coil (21),
**characterised in that**
an interchangeable third component (1; 2) is connected to the second component (3; 7.2);
the second component (3; 7.2) comprises a third antenna coil (21) which is electrically connected to the second antenna coil (21) by means of a cable (20.1, 19.2), preferably a coaxial cable, the cable (20.1, 19.2) running completely in the interior of the second component (3; 7.2);
the third component (1; 2) comprises a fourth antenna coil (21);
the second component (3; 7.2) and the third component (1; 2) together define a further cavity which is surrounded essentially completely by an electrically conductive material, in particular a metal, and
the third antenna coil (21) and the fourth antenna coil (21) are arranged together in the further cavity in order to permit wireless signal transmission between the third antenna coil (21) and the fourth antenna coil (21) .

2. The machine tool as claimed in claim 1, wherein the third component (1; 2) comprises an RFID transponder (14; 15), which is electrically connected to the fourth antenna coil (21) and which has a transmission and/or reception frequency of more than 5 MHz.

3. The machine tool as claimed in claim 1 or 2, wherein the first component (4) and the second component (3) are rotatable relative to one another about a rotational axis, and wherein the first antenna coil and the second antenna coil (21) are arranged in such a way that signals can be transmitted in a wireless fashion between the first antenna coil and the second antenna coil (21) both in the stationary state and during a rotation of the second component (3) with respect to the first component (4).

4. The machine tool as claimed in any one of the preceding claims, the first component (4) and the second component (3) are rotatable relative to one another about a rotational axis, wherein the first antenna coil (21) defines a first coil axis, wherein the second antenna coil (21) defines a second coil axis, and wherein the first coil axis and the second coil axis coincide with the rotational axis.

5. The machine tool as claimed in claim 1 or 2, wherein the first component (5) and second component (7.2) together are rotatable with respect to a machine bed about a rotational axis, and wherein the cavity is arranged concentrically with respect to the rotational axis or in a decentralized fashion at a distance from the rotational axis.

6. The machine tool as claimed in any one of the preceding claims, wherein the first antenna coil (21) defines a first coil axis, wherein the second antenna coil (21) defines a second coil axis, and wherein the first coil axis and the second coil axis coincide.

7. The machine tool as claimed in any one of the preceding claims,
wherein at least the first component (4; 5) has a region made of electrically conductive material, preferably metal, with a cylindrical recess (12.1; 12.2),
wherein the cylindrical recess (12.1; 12.2) defines a cylinder axis and has an opening toward a surface of the first component (4; 5),
wherein the first antenna coil (21) is arranged concentrically with respect to the cylinder axis in a region of the cylindrical recess (12.1; 12.2) which is near to the opening, and
wherein the cylindrical recess (12.1; 12.2) is closed by the second component (3; 7.2) to form the cavity.

8. The machine tool as claimed in claim 7,
wherein the second component (3; 7.2) has a region made of electrically conductive material with a second cylindrical recess (12.1; 12.2) which is open toward the first component (4; 5),
wherein the first cylindrical recess (12.1; 12.2) and the second cylindrical recess (12.1.; 12.2) define a common cylinder axis and are located one opposite the other in such a way that together they bound a cylindrical cavity, and
wherein the first antenna coil (21) and the second antenna coil (21) are arranged concentrically with respect to the common cylinder axis in the cavity and are located axially opposite one another or surround one another radially.

9. The machine tool as claimed in any one of the preceding claims, wherein the first and/or second antenna coils (21) are arranged in the form of one or more printed windings on an electrically insulating, annular circuit board (22; 23; 24; 25) with a central opening.

10. The machine tool as claimed in claim 9, wherein at least one electrical or electronic element, in particular an element for matching impedance (16), and/or a socket (17) for connecting a coaxial cable (20.1; 19.2), is mounted on the annular circuit board (22; 23; 24; 25), and wherein all such electrical or electronic elements are arranged on a side of the annular circuit board (22; 23; 24; 25) facing away from the windings.

11. A component of a machine tool,
wherein the component (3; 7.2) comprises an antenna coil (21) for wireless signal transmission, wherein the antenna coil (21) defines a coil axis;
wherein the component (3; 7.2) has a region made of electrically conductive material with a cylindrical recess (12.1; 12.2), wherein the cylindrical recess (12.1; 12.2) defines a cylinder axis and is open toward a surface of the component, and
wherein the antenna coil (21) in the cylindrical recess (12.1; 12.2) is arranged concentrically with respect to the cylinder axis,
**characterised in that** the component (3; 7.2) comprises a further antenna coil (21);
the two antenna coils (21) are electrically connected by means of at least one cable (29.1; 19.2), preferably a coaxial cable; and
the cable (20.1; 19.2) runs completely in the interior of the component (3; 7.2).

12. The component as claimed in claim 11, wherein the antenna coil (21) is arranged in the form of one or more printed windings on an electrically insulating, annular circuit board (22; 23; 24; 25) with a central opening.

13. The machine tool as claimed in claim 12, wherein at least one electrical or electronic element, in particular an element for matching impedance (16), and/or a socket (17) for connecting a coaxial cable (20.1; 19.2), is mounted on the annular circuit board (22; 23; 24; 25), and wherein all such electrical or electronic elements are arranged on a side of the annular circuit board (22; 23; 24; 25) facing away from the windings.

14. The component as claimed in any one of claims 11 to 13, wherein the cable (20.1; 19.2) runs through a cable guide bore which is filled with a sealing compound (32), and wherein the cable (20.1; 19.2) is loosely surrounded by a hose, with the result that the cable (20.1; 19.2) is strain-relieved when the sealing compound (32) cures.

15. The component as claimed in claim 14, wherein the component (3; 7.2) is configured to be arranged on the machine tool so as to be rotatable about a rotational axis, wherein the cable guide bore runs at least in one region in a decentralized fashion at a distance from the rotational axis, and wherein the component (3; 7.2) has a compensation bore which is configured essentially identically to the cable guide bore, runs offset with respect to the cable guide bore by 180° in relation to the rotational axis and is also filled with the sealing compound.

## Revendications

1. Une machine-outil, comprenant
un premier composant (4, 5), présentant une première bobine d'antenne (21) servant à transmettre un signal sans fil, et
un second composant (3, 7.2), agencé de manière amovible et/ou mobile sur le premier composant (4, 5)), présentant une seconde bobine d'antenne (21) servant à transmettre un signal sans fil,
le premier composant (4, 5) et le second composant (3, 7.2) définissant conjointement une cavité, qui est sensiblement complètement entourée d'un matériau électriquement conducteur, en particulier de métal, et
la première bobine d'antenne (21) et la seconde bobine d'antenne (21) étant agencées conjointement dans la cavité, afin de permettre une transmission de signal sans fil entre la première bobine d'antenne (21) et la seconde bobine d'antenne (21),
**caractérisé en ce que**
un troisième composant (1, 2) échangeable est relié au second composant (3, 7.2),
le second composant (3, 7.2) présente une troisième bobine d'antenne (21), qui est reliée électriquement par un câble (20.1, 19.2), de préférence un câble coaxial, à la seconde bobine d'antenne (21), où le câble (20.1, 19.2) passe intégralement à l'intérieur du second composant (3, 7.2);
le troisième composant (1, 2) présente une quatrième bobine d'antenne (21);
le second composant (3, 7.2) et le troisième composant (1, 2) définissent conjointement une autre cavité, qui est sensiblement complètement entourée d'un matériau électriquement conducteur, en particulier de métal, et
la troisième bobine d'antenne (21) et la quatrième bobine d'antenne (21) sont agencées conjointement dans l'autre cavité, afin de permettre une transmission de signal sans fil entre la troisième bobine d'antenne (21) et la quatrième bobine d'antenne (21).

2. Machine-outil selon la revendication 1, dans laquelle le troisième composant (1, 2) présente un transpondeur RFID (14, 15), qui est électriquement relié à la quatrième bobine d'antenne (21) qui présente fréquence d'émission et / ou de réception supérieure à 5 MHz.

3. Machine-outil selon la revendication 1 ou 2, dans laquelle le premier composant (4) et le second composant (3) sont rotatifs l'un par rapport à l'autre autour d'une axe de rotation, et dans laquelle la première bobine d'antenne (21) et seconde bobine d'antenne (21) définit un premier axe de bobine, dans laquelle la première bobine d'antenne et la seconde bobine d'antenne (21) sont agencées de sorte à permettre une transmission de signal sans fil entre la première bobine d'antenne et la seconde bobine d'antenne pendant l'arrêt ainsi que pendant la rotation du second composant (3) par rapport au premier composant (4).

4. Machine-outil selon l'une des revendications précédentes, dans laquelle le premier composant (4) et le second composant (3) sont rotatifs l'un par rapport à l'autre autour d'une axe de rotation, dans laquelle la première bobine d'antenne (21) définit un premier axe de bobine, la seconde bobine d'antenne (21) définit un second axe de bobine, et dans laquelle le premier axe de bobine et le second axe de bobine coïncident avec l'axe de rotation.

5. Machine-outil selon la revendication 1 ou 2, dans laquelle le premier composant (4) et le second composant (3) sont conjointement rotatifs autour d'un axe de rotation par rapport à un bâti de machine, et dans laquelle la cavité est agencée concentriquement à l'axe de rotation ou décentrée à une distance de l'axe de rotation.

6. Machine-outil selon l'une des revendications précédentes, dans laquelle la première bobine d'antenne (21) définit un premier axe de bobine, la seconde bobine d'antenne (21) définit un second axe de bobine, et dans laquelle le premier axe de bobine et le second axe de bobine coïncident.

7. Machine-outil selon l'une des revendications précédentes,
dans laquelle au moins le premier composant (4; 5) possède une région en matériau électriquement conducteur, de préférence en métal, avec un évidement cylindrique (12.1; 12.2),
où l'évidement cylindrique (12.1; 12.2) définit un axe de cylindre et possède une ouverture sur une surface du premier composant (4; 5),
où la première bobine d'antenne (21) est agencée concentriquement à l'axe de cylindre dans une région de l'évidement cylindrique (12.1; 12.2) près de l'ouverture, et
où l'évidement cylindrique (12.1; 12.2) est fermé par le second composant (3; 7.2) par rapport à la cavité.

8. Machine-outil selon la revendication 7,
dans laquelle le second composant (3; 7.2) possède une région en matériau électriquement conducteur, de préférence en métal, avec un second évidement cylindrique (12.1; 12.2), qui est ouverte sur le premier composant (4; 5),
où le premier évidement cylindrique (12.1; 12.2) et le second évidement cylindrique (12.1; 12.2) définissent un axe de cylindre commun, et font face l'un à l'autre de manière à délimiter conjointement la cavité,
où la première bobine d'antenne (21) et la seconde bobine d'antenne (21) sont agencées concentriquement à l'axe de cylindre commun dans la cavité, et se font face axialement ou s'entourent radialement.

9. Machine-outil selon l'une des revendications précédentes, dans laquelle la première et / ou la seconde bobine d'antenne (21) sont agencées sous forme d'une ou plusieurs spires imprimées sur une carte de circuit annulaire électriquement isolante (22; 23; 24; 25) avec une ouverture centrale.

10. Machine-outil selon la revendication 9, dans laquelle au moins un composant électrique ou électronique est fixé à la carte de circuit annulaire (22; 23; 24; 25), en particulier un composant pour l'adaptation d'impédance (16) et/ou une prise (17) pour connecter un câble coaxial (20.1;19.2) et/ou dans laquelle tous ces composants électriques ou électroniques sont agencés sur un côté de la carte de circuit annulaire(22; 23; 24; 25) tourné à l'opposé des spires.

11. Un composant de machine-outil, comprenant
dans lequel le composant (3; 7.2), présente une bobine d'antenne (21) servant à transmettre un signal sans fil, où la bobine d'antenne (21) définit un axe de bobine;
dans lequel le composant (3, 7.2) possède une région en matériau électriquement conducteur avec un évidement cylindrique (12.1; 12.2), où l'évidement cylindrique (12.1; 12.2) définit un axe de cylindre et est ouvert sur une surface du composant, et
dans lequel la bobine d'antenne (21) est agencée concentriquement à l'axe de cylindre dans l'évidement cylindrique (12.1; 12.2);
les deux bobines d'antenne (21) sont reliées électriquement par un câble (20.1, 19.2), de préférence un câble coaxial, et
dans lequel le câble (20.1, 19.2) passe intégralement à l'intérieur du composant (3, 7.2).

12. Composant selon la revendication 11, dans la bobine d'antenne (21) est agencée sous forme d'une ou plusieurs spires imprimées sur une carte de circuit annulaire électriquement isolante (22; 23; 24; 25) avec une ouverture centrale.

13. Composant selon la revendication 12, dans lequel au moins un composant électrique ou électronique est fixé à la carte de circuit annulaire (22; 23; 24; 25), en particulier un composant pour l'adaptation d'impédance (16) et/ou une prise (17) pour connecter un câble coaxial (20.1;19.2) et dans lequel tous ces composants électriques ou électroniques sont agencés sur un côté de la carte de circuit annulaire (22; 23; 24; 25) tourné à l'opposé des spires.

14. Composant selon une des revendications 11 à 13, dans lequel le câble (20.1; 19.2) passe par un alésage de guidage de câble rempli d'une masse d'encapsulation (32), et dans lequel le câble est entouré de manière lâche par un tuyau, de sorte que le câble est déchargé de la tension lorsque le la masse d'encapsulation durcit

15. Composant selon la revendication 14, dans lequel le composant (3, 7.2) est conçu de manière à pouvoir être tourné autour d'un axe de rotation sur la machine-outil, dans lequel l'alésage de guidage de câble s'étendant au moins dans des régions décentrées par rapport à l'axe de rotation, et dans lequel le composant (3; 7.2) possède un alésage de compensation, qui est conçu sensiblement identique à l'alésage de guidage de câble, s'étend de manière décalée de 180 ° par rapport à l'axe de rotation et est également rempli de masse d'encapsulation.
